# EUROPEAN PATENT SPECIFICATION

(11) **EP 2 721 896 B1**
(45) Date of publication and mention of the grant of the patent: **22.08.2018**
(21) Application number: 12735353.0
(22) Date of filing: 15.06.2012
(51) Int. Cl.: H04W 74/08, H04W 84/04

(54) **METHODS AND NODES FOR RANDOM ACCESS**
VERFAHREN UND KNOTEN FÜR DIREKTZUGANG
PROCÉDÉS ET NOEUDS POUR UN ACCÈS ALÉATOIRE

(30) Priority: 17.06.2011 US 201161498357 P
(43) Date of publication of application: 23.04.2014
(73) Proprietor: Telefonaktiebolaget LM Ericsson (publ), 164 83 Stockholm (SE)
(72) Inventor: LINDOFF, Bengt, S-237 35 Bjärred (SE); SIOMINA, Iana, S-170 66 Solna (SE); KAZMI, Muhammad, S-167 39 Bromma (SE)
(74) Representative: Zacco Sweden AB
(86) International application number: PCT/SE2012/050658
(87) International publication number: WO 2012/173565

(56) References cited:
- WO-A1-2010/127633
- WO-A1-2011/017281
- US-A1- 2011 014 922
- HUAWEI ET AL: "Random access for handover in co-channel HetNet", 3GPP DRAFT; R2-111017 RANDOM ACCESS ISSUE FOR HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493670, [retrieved on 2011-02-15]

## Description

### TECHNICAL FIELD

The disclosure relates to random access, and more specifically to methods for performing random access and/or supporting random access procedures, as well as to a wireless device, and to nodes of a wireless network.

### BACKGROUND

3GPP Long Term Evolution (LTE) is the fourth-generation mobile communication technologies standard developed within the 3^{rd} Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an UTRAN and an E-UTRAN, a User Equipment (UE) is wirelessly connected to a Radio Base Station (RBS) commonly referred to as a NodeB (NB) in UMTS, and as an evolved NodeB (eNodeB or eNodeB) in LTE. An RBS is a general term for a radio network node capable of transmitting radio signals to a UE and receiving signals transmitted by a UE.

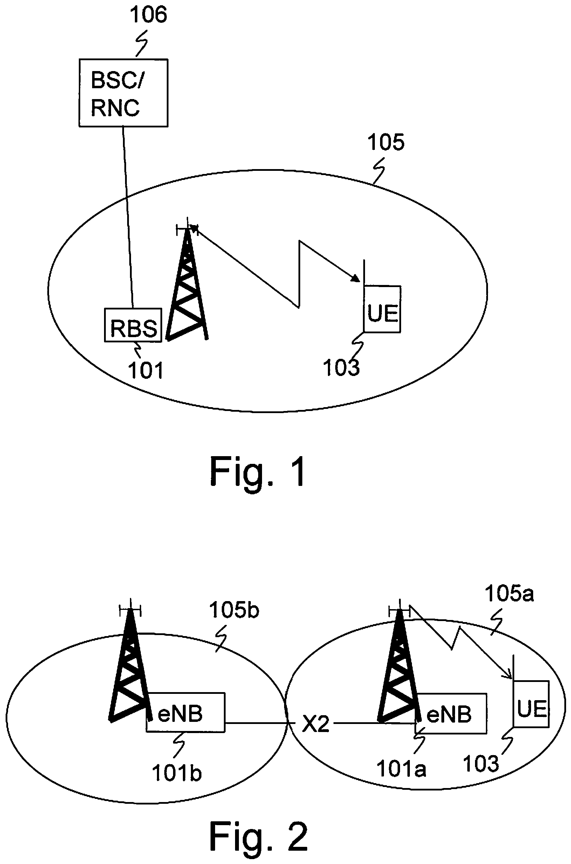

**Figure 1** illustrates a radio access network with an RBS 101 that serves a UE 103 located within the RBS's geographical area of service, called a cell 105. In UMTS, a Radio Network Controller (RNC) 106 controls the RBS 101 and other neighboring RBSs, and is, among other things, in charge of management of radio resources in cells for which the RNC is responsible. The RNC is in turn also connected to the core network. In GSM, the node controlling the RBS 101 is called a Base Station Controller (BSC) 106. **Figure 2** illustrates a radio access network in an LTE system. An eNodeB 101a serves a UE 103 located within the RBS's geographical area of service or the cell 105a. The eNodeB 101a is directly connected to the core network. The eNodeB 101a is also connected via an X2 interface to a neighboring eNodeB 101b serving another cell 105b.

The interest in deploying low-power nodes, such as pico base stations, home eNodeBs, relays, or remote radio heads, for enhancing the macro network performance in terms of the network coverage, capacity and service experience of individual users has been constantly increasing over the last few years. At the same time, there has been realized a need for enhanced interference management techniques to address the arising interference issues caused, for example, by a significant transmit power variation among different cells and cell association techniques developed earlier for more uniform networks.

In 3GPP, heterogeneous network deployments have been defined as deployments where low-power nodes of different transmit powers are placed throughout a macro-cell layout, implying also non-uniform traffic distribution. Such deployments are, for example, effective for capacity extension in certain areas, so-called traffic hotspots, i.e. small geographical areas with a higher user density and/or higher traffic intensity where installation of pico nodes can be considered to enhance performance. Heterogeneous deployments may also be viewed as a way of increasing the density of networks to adapt for the traffic needs and the environment. However, heterogeneous deployments also bring challenges for which the network has to be prepared to ensure efficient network operation and superior user experience. Some challenges are related to the increased interference in the attempt to increase small cells associated with low-power nodes, also known as cell range expansion.

### Cell Range Expansion

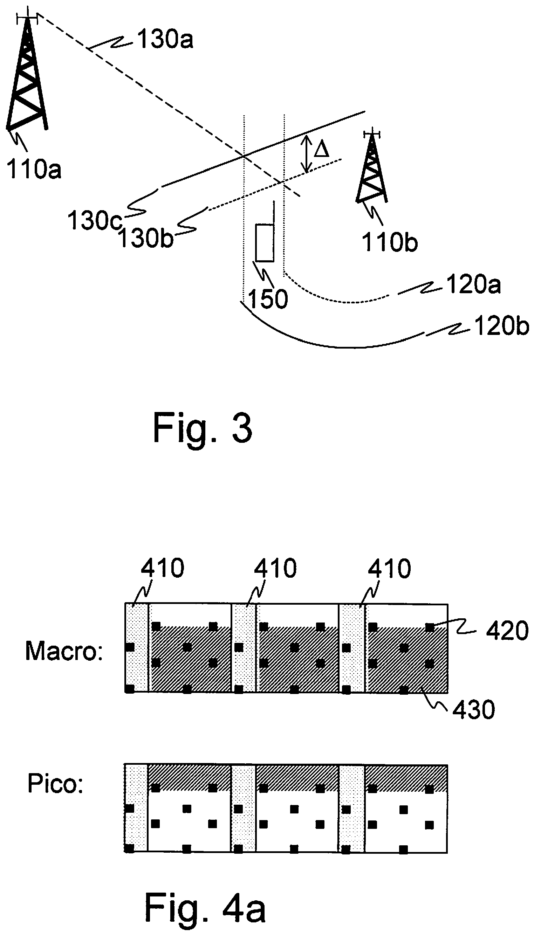

The need for enhanced Inter-Cell Interference Coordination (ICIC) techniques is particularly crucial when the cell assignment rule diverges from the Reference Signal Received Power (RSRP)-based approach. This is e.g. the case when a path loss- or a path gain-based approach is used. This approach is sometimes also referred to as the cell range expansion, when it is adopted for cells with a transmit power lower than neighbor cells. The idea of the cell range expansion is illustrated in **Figure 3****,** where the cell range expansion of a pico cell served by a pico BS 110b is implemented by means of a delta-parameter Δ. The expanded cell range of the pico BS 110b corresponds to the outermost cell edge 120b, while the conventional RSRP-based cell range of pico BS 110b corresponds to the innermost cell edge 120a. The pico cell is expanded without increasing its power, just by changing the reselection threshold. In one example, the UE 150 chooses the cell of pico BS 110b as the serving cell when RSRPb+Δ≥RSRPa, where RSRPa is the signal strength measured for the cell of macro BS 110a and RSRPb is the signal strength measured for the cell of pico BS 110b. The striped line 130a illustrates RSRPa from the macro BS 110a, the dotted line 130b illustrates RSRPb from the pico BS 110b corresponding to the cell range 120a, and the solid line 130c illustrates the received signal strength from the pico BS 110b corresponding to the cell edge of expanded cell range 120b. This results in a change from the conventional cell range 120a to an expanded cell range 120b when Δ>0. Such cell range expansion is of interest in heterogeneous networks, since the coverage of e.g. pico cells may otherwise be too small and the radio resources of these nodes may be underutilized. However, as a result a UE may not always be connected to the strongest cell when it is in the neighborhood of a pico cell. The UE may thus receive a stronger signal from the interfering cell compared to the signal received from the serving cell. This results in a poor signal quality in downlink when the UE is receiving data at the same time as the interfering base station is transmitting.

### Interference Management for Heterogeneous Deployments

To ensure reliable and high-bit rate transmissions, as well as robust control channel performance, good signal quality must be maintained in wireless networks. The signal quality is determined by the received signal strength and its relation to the total interference and noise received by the receiver. A good network plan, which among other factors also includes cell planning, is a prerequisite for the successful network operation. However, a network plan is static. For more efficient radio resource utilization, the network plan has to be complemented at least by semi-static and dynamic radio resource management mechanisms, which are also intended to facilitate interference management, and deployment of advanced antenna technologies and algorithms.

One way to handle interference is, for example, to adopt more advanced transceiver technologies, e.g. by implementing interference cancellation mechanisms in terminals. Another way, which can be complementary to the former, is to design efficient interference coordination algorithms and transmission schemes in the network.

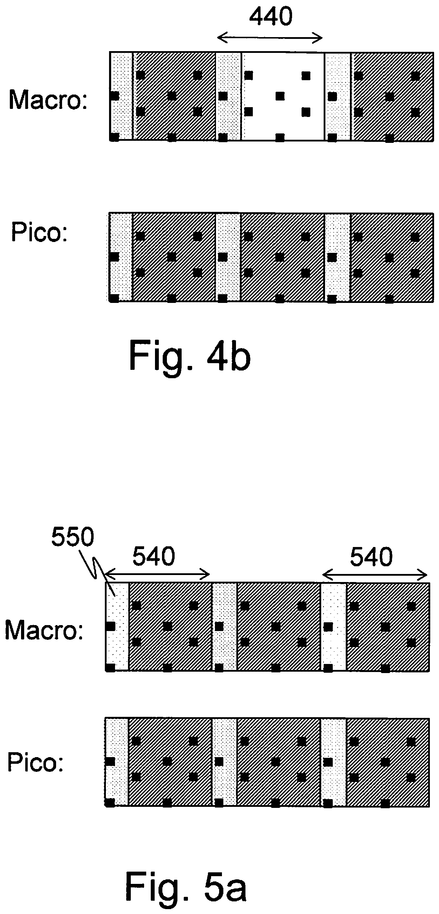

ICIC methods for coordinating data transmissions between cells have been specified in LTE release 8, where the exchange of ICIC information between cells in LTE is carried out via the X2 interface by means of the X2-AP protocol. Based on this information, the network can dynamically coordinate data transmissions in different cells in the time-frequency domain and also by means of power control so that the negative impact of inter-cell interference is minimized. With such coordination, base stations may optimize their resource allocation by cells either autonomously or via another network node ensuring centralized or semi-centralized resource coordination in the network. With the current 3GPP specification, such coordination is typically transparent to wireless devices. Two examples of coordinating interference on data channels are illustrated in **Figures 4a-****b.** The figures illustrate a frame structure for three subframes, carrying the periodically occurring Cell specific Reference Signals (CRS) 420, and with a control channel region 410 in the beginning of each subframe, followed by a data channel region 430. The control and data channel regions are white when not carrying any data and filled with a structure otherwise. In the first example illustrated in **Figure 4a****,** data transmissions in two cells belonging to different layers are separated in frequency. The two layers may e.g. be a macro and a pico layer respectively. In the second example illustrated in **Figure 4b****,** low-interference conditions are created at some time instances for data transmissions in pico cells. This is done by suppressing macro-cell transmissions in these time instances, i.e. in so called low-interference subframes 440, in order to enhance performance of UEs which would otherwise experience strong interference from macro cells. One example is when UEs are connected to a pico cell however still located close to macro cells. Such coordination mechanisms are possible by means of coordinated scheduling, which allows for dynamic interference coordination. There is e.g. no need to statically reserve a part of the bandwidth for highly interfering transmissions.

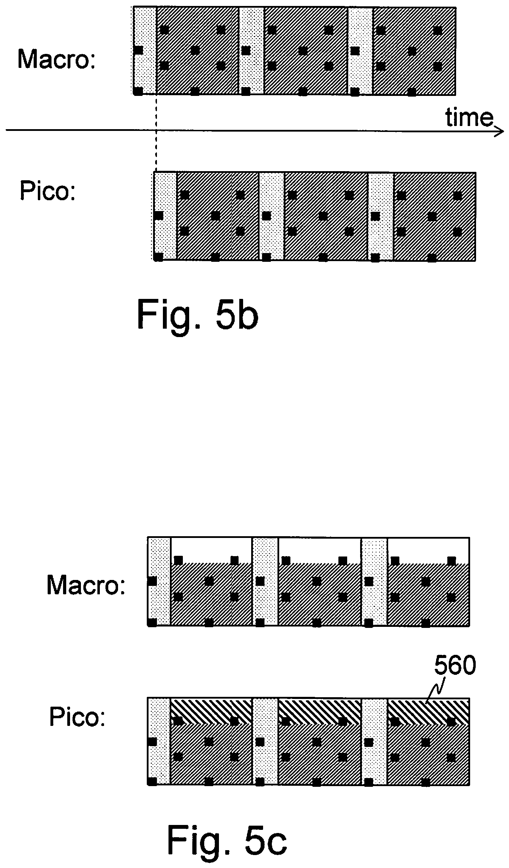

In contrast to user data, ICIC possibilities for control channels and reference signals are more limited. The mechanisms illustrated in **Figures 4a****-b** are e.g. not beneficial for control channels. Three known approaches of enhanced ICIC (e-ICIC) to handle the interference on control channels are illustrated in **Figures 5a****-c.** The approaches illustrated in **Figures 5a** **and** **5c** require standardization changes while the approach illustrated in **Figure 5b** is possible with the current standard although it has some limitations for Time Division Duplex (TDD) systems, is not possible with synchronous network deployments, and is not efficient at high traffic loads. In **Figure 5a****,** low-interference subframes 540 are used in which the control channels 550 are transmitted with reduced power for the channels. In **Figure 5b****,** time shifts are used between the cells, and in **Figure 5c** in-band control channels 560 are used in combination with a control of the frequency reuse.

The basic idea behind interference coordination techniques as illustrated in **Figures 4a****-b** and **Figures 5a****-c** is that the interference from a strong interferer, such as a macro cell, is suppressed during another cell's - e.g. a pico cell's - transmissions. It is assumed that the pico cell is aware of the time-frequency resources with low-interference conditions and thus can prioritize scheduling in those subframes of the transmissions for users which are likely to suffer most from the interference caused by the strong interferers. The possibility of configuring low-interference subframes, also known as Almost Blank subframes (ABS), in radio nodes and exchanging this information among nodes, as well as time-domain restricted measurement patterns restricting UE measurements to a certain subset of subframes signaled to the UE, have recently been introduced in the 3GPP standard (TS 36.423 v10.1.0, section 9.2.54, and 3GPP TS 36.331 v10.1.0, section 6.3.6, respectively). An eNodeB may thus transmit ABS which are subframes with reduced power and/or reduced activity on some physical channels, in order to allow the UE to perform measurements under low-interference conditions.

With the approaches illustrated in **Figures 4a****-b** and **Figures 5a****-c,** there may still be a significant residual interference on certain time-frequency resources, e.g., from signals whose transmissions cannot be suppressed, such as CRS or synchronization signals. Some known techniques to reduce interference are:
- Signal cancellation, by which the channel is measured and used to restore the signal from a limited number of the strongest interferers. This has impacts on the receiver implementation and its complexity. In practice, channel estimation puts a limit on how much of the signal energy that can be subtracted.
- Symbol-level time shifting. This technique has no impact on the standard, but is not relevant e.g. for TDD networks and networks providing the Multimedia Broadcast Multicast Service (MBMS) service. This is also only a partial solution to the problem since it allows to distribute interference and avoid it on certain time-frequency resources, but not to eliminate it.
- Complete signal muting in a subframe. It could e.g. be not to transmit CRS and possibly also other signals in some subframes. This technique is non-backward compatible to Rel. 8/9 UEs which expect CRS to be transmitted, at least on antenna port 0 in every subframe, even though it is not mandated that the UE performs measurements on those signals every subframe.

Using MBSFN subframes with no MBMS transmissions, which will hereinafter be referred to as blank MBSFN subframes, is a backwards compatible approach that achieves the effect similar to that with complete signal muting, since no signals, not even CRS, are transmitted in the data region of a blank MBSFN subframe. Although CRS are still transmitted in the first symbol of the first slot of a blank MBSFN, using blank MBSFN subframes to avoid potential interference from strongly interfering cells may still be an attractive approach for at least some network deployments.

### Restricted measurement pattern configuration used for enhanced inter-cell interference coordination (elCIC)

To facilitate measurements in an expanded cell range, i.e., where high interference is expected, the standard specifies ABS patterns for eNodeBs, as described above, as well as restricted measurement patterns for UEs. An ABS pattern is a transmission pattern at the radio base station which is cell-specific, typically configured in a cell (aka aggressor cell) to reduce interference to another cell (aka victim cell). The ABS pattern may be different from the restricted measurement patterns signaled to the UE. Restricted pattern is typically configured for a UE suffering from high (aggressor) cell interference served by a (victim) cell. As described below, the restricted measurement pattern may be configured for serving-cell measurements and for neighbor cell measurements. Depending on the measured cell, the victim cell may be a serving cell or a neighbor cell, and the aggressor cell may also be a serving cell or a neighbor cell.

To enable restricted measurements for Radio Resource Management (RRM), Radio Link Management (RLM), Channel State Information (CSI), as well as for demodulation, the UE may receive the following set of patterns via Radio Resource Control (RRC) UE-specific signaling. The set of patterns are described in TS 36.331 v10.1.0, sections 6.3.2, 6.3.5, and 6.3.6:
- Pattern 1: A single RRM/RLM measurement resource restriction pattern for the serving cell.
- Pattern 2: One RRM measurement resource restriction pattern per frequency for neighbor cells (up to 32 cells). This measurement is currently only defined for the serving frequency.
- Pattern 3: A resource restriction pattern for CSI measurement of the serving cell with two subframe subsets configured per UE.

The pattern is a bit string indicating restricted subframes, where the pattern is characterized by a length and a periodicity. The restricted subframes are the subframes indicated by a measurement resource restriction pattern in which the UE is allowed or recommended to perform measurements. The length and periodicity of the patterns are different for Frequency Division Duplex (FDD) and TDD (40 subframes for FDD and 20, 60 or 70 subframes for TDD).

Restricted measurement subframes are configured to allow the UE to perform measurements in subframes with improved interference conditions. Improved interference conditions may e.g. be implemented by configuring ABS patterns at interfering radio nodes such as macro eNodeBs. A pattern indicating such subframes with improved interference conditions may then be signaled to the UE in order for the UE to know when it may measure a signal under improved interference conditions. The pattern may be interchangeably called a restricted measurement pattern, a measurement resource restriction pattern, or a time domain measurement resource restriction pattern. As explained above, an ABS is a subframe with reduced transmit power or activity. In one example, an MBSFN subframe may be an ABS, although it does not have to be an ABS and the MBSFN subframe may even be used for purposes other than interference coordination in the heterogeneous network. ABS patterns may be exchanged between eNodeBs, e.g., via X2, but these eNodeB transmit patterns are not signaled to the UE. However, an MBSFN configuration is signaled to the UE. Signaling independent of the elCIC patterns is used for configuring MBSFN subframes in the UE, via System Information Block (SIB) Type 2 (SIB2).

In a general case, Physical Downlink Shared Channel (PDSCH) transmissions are allowed in ABS subframes, but it is left up to the network implementation how interference is coordinated across the network in these subframes. UEs in Rel-8/9 transmission mode cannot receive PDSCH in MBSFN subframes. This may be exploited e.g. for energy saving. Rel-10 UEs will support PDSCH transmissions in MBSFN subframes, but only UEs in specific transmission modes - transmission mode 9 (TM 9) - will be able to receive DownLink (DL) assignments in signaled MBSFN subframes. These UEs will have to monitor Physical Downlink Control Channel (PDCCH) to check whether there is a DL assignment on a DL Shared Channel (SCH) for this UE. These UEs are also capable of receiving demodulation reference signals for channel estimation, and the need for CRS can thus be avoided.

### Random Access

Another aspect of interest for this discussion involves Random Access Channel (RACH) transmissions in E-UTRAN. The Random Access (RA) procedure in LTE is performed to enable the UE to gain uplink access under the following scenarios (see also 3GPP TS 36.300 V10.3.0 (2011-03) section 10.1.5 for more details):
- During an initial access in idle mode;
- For RRC connection re-establishment, e.g. after a radio link failure, or a handover failure;
- After the UE has lost uplink synchronization;
- Due to data arrival when UE in connected mode does not retain UpLink (UL) synchronization e.g. due to long Discontinuous Reception (DRX);
- During HandOver (HO);

RA may also be used to facilitate positioning measurements, e.g. for performing eNodeB Rx-Tx time difference measurement which in turn is used for deriving a timing advance value.

There are various types of RA procedures. The RA procedure can be either contention based or non-contention based. The contention based RA is used during initial access, for RRC connection re-establishment, to regain uplink synchronization and for data transmission when there is no uplink synchronization. On the other hand the non-contention based RA is used during HO and for positioning measurements. Both contention and non-contention RA mechanisms comprise of multi-step procedures.

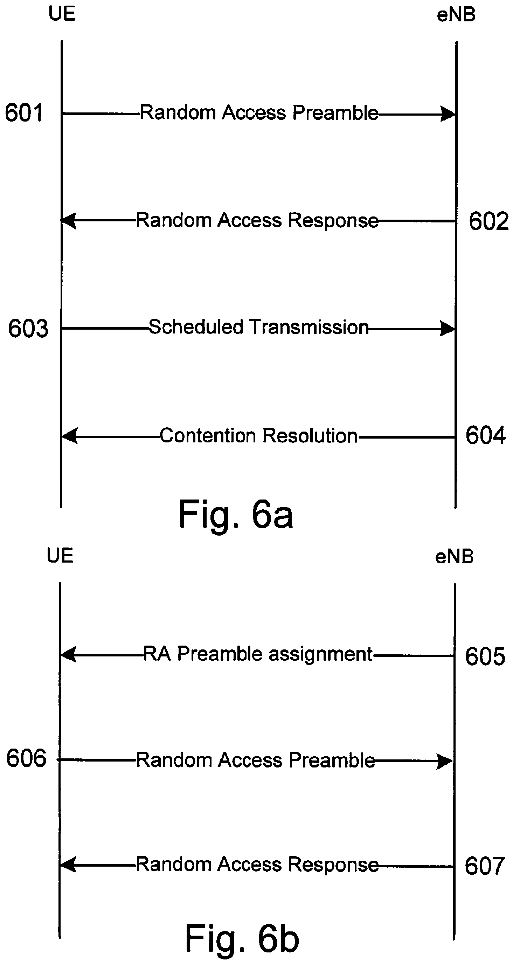

In the contention based RA procedure, schematically illustrated in **Figure 6a****,** the UE randomly selects the RA preamble during the RACH opportunity to the eNodeB in the first step 601. During the second step 602 the network responds to the UE with at least a RA preamble identifier, and an initial uplink grant in the RA Response (RAR) message. During the third step 603, the UE uses the initial uplink grant or allocation received in RAR to transmit further details related to the connection request in a message also known as a message 3 (msg3). In message 3 the UE also sends its identifier, which is echoed by the eNodeB in the contention resolution message during the fourth and final step 604. The contention resolution is considered successful if the UE detects its own identity in the contention resolution message. Otherwise it reattempts the RA.

In non-contention based RA procedure, schematically illustrated in the signaling diagram in **Figure 6b****,** the eNodeB first assigns a RA preamble in 605. In the next step 606 the UE sends the assigned preamble during the RACH opportunity to the eNodeB. In the last step 607 the network responds to the UE with at least a RA preamble identifier, and an initial uplink grant in the RAR message. The UE uses the initial allocation received in RAR to transmit further details related to for example HO. In case of non-contention based RA there is no contention resolution phase.

### RACH transmission opportunities

The time-frequency resources where RA can be performed are sent in via system information mapped on the broadcast channel for all UEs or on a shared channel for a specific UE. One RA opportunity or resource is 1.07 MHz wide, which corresponds to 6 Resource Blocks (RBs), and lasts either for 1 ms or 2 ms depending on the RACH preamble format. For Frequency Division Duplex (FDD), there can be at most one RA resource per subframe. For Time Division Duplex (TDD), multiple RA opportunities can be spread out over frequency, depending on the Uplink(UL) or Downlink (DL) configuration. It is up to the network whether to schedule other data in a RA slot or not. The network thus also controls whether RA transmission is orthogonal to shared data transmission or not.

### RACH Format and Associated Parameters

The RACH burst in LTE contains a cyclic prefix, the RACH preamble, and a guard interval. The cyclic prefix is in the beginning of the RACH burst and is a copy of the last part of the RACH preamble. The cyclic prefix enables efficient frequency-domain processing of the RACH burst in the eNodeB RACH receiver. The guard interval accounts for the unknown round trip delay in the cell. Both cyclic prefix and guard interval must be larger than the maximum round trip delay to ensure proper operation.

The LTE standard defines three RACH preamble formats:
1. Standard format over 1 ms: The preamble part of the RACH burst is not repeated. The cyclic prefix and guard period are balanced and enable cell sizes of approximately 15 km, only considering round trip delay, not link budget.
2. Format with extended cyclic prefix over 2 ms: This format provides extended cyclic prefix and guard periods but no repetition of the preamble. The cyclic prefix and guard period are balanced and enable cell sizes of approximately 80 to 90 km only considering round trip delay, not link budget.
3. Repeated preamble format: The preamble is repeated to enable a higher received energy at the receiver.

### Characteristics of RACH preamble sequences

In LTE there are 64 RA preambles per cell. The RA preambles assigned to adjacent cells are typically different to insure that a RA in one cell does not trigger any RA events in a neighboring cell. Furthermore one or multiple preambles can be derived from a Zadoff-Chu or root sequence, depending on the number of allowed cyclic shifts, as will be explained later. Zadoff-Chu sequences are so called Constant Amplitude Zero Auto Correlation (CAZAC) sequences. This implies a constant magnitude and a perfect periodic auto-correlation function, i.e. the correlation has a single peak at time-lag zero and vanishes everywhere else. This property can now be used to derive multiple preambles from a singe root sequence.

The RACH preamble may be derived from Zadoff-Chu root sequences. These sequences have ideal periodic auto-correlation functions and given this auto-correlation also have the best possible periodic cross-correlation functions. Depending on the cell size multiple RACH preambles can be derived from a single Zadoff-Chu root sequence. In addition to the root Zadoff-Chu sequence - which is always a valid RACH preamble - additional preambles can be derived by cyclic shifting the Zadoff-Chu root sequence integer multiples of the minimum shift amount. This minimum shift amount depends on the cell size and must be at least as large as the maximum round trip delay plus maximum expected delay spread in the cell. This condition together with the ideal auto-correlation function insures that a RACH preamble transmitted with a certain cyclic shift never creates a correlation peak in a zone associated with another cyclic shift, i.e. all RACH preambles derived from a single Zadoff-Chu root sequence are orthogonal.

If the cell size becomes too large not all required 64 preambles can be derived from a single Zadoff-Chu root sequence, in this case additional root sequences needs to be allocated. Preambles derived from different root sequences are not mutually orthogonal. Information that must be conveyed to a terminal or UE is the Zadoff-Chu root sequence together with the minimum cyclic shift value. These two information elements enable a UE to construct a RACH preamble and are received by the UE in the system information or mobility control information. Even in case when a single Zadoff-Chu root sequence is not sufficient this information is sufficient since the UE can calculate how many root sequences that are needed and can select them according to a predefined rule.

### Minimization of Drive Tests (MDT)

The MDT feature has been introduced in LTE and HSPA release 10. The MDT feature provides means for reducing the effort for operators when gathering information for the purpose of network planning and optimization. The MDT feature requires that the UEs log or obtain various types of measurements, events and coverage related information. The logged or collected measurements or relevant information are then sent to the network. This is in contrast to the traditional approach where the operator has to collect similar information by means of so called drive tests and manual logging. The MDT is described in TS 37.320.

The UE can collect the measurements during connected as well as in low activity states, such as in idle state in UTRAIE-UTRA, or in cell PCH state in UTRA. A few examples of potential MDT UE measurements, further described in 3GPP TS 36.805, are:
- Mobility measurements such as RSRP, and RSRQ;
- Random access failure;
- Paging Channel Failure (Paging Control Channel (PCCH) Decode Error);
- Broadcast Channel failure;
- Radio link failure report.

### Self Organizing Network (SON)

The E-UTRAN employs the concept of SON. The objective of the SON entity is to allow operators to automatically plan and tune network parameters and configure network nodes. The conventional method is based on manual tuning, which consumes enormous amounts of time and resources, and requires considerable involvement of work force. In particular due to the network complexity, large number of system parameters, and Inter-Radio Access Technologies (IRAT), it is very attractive to have reliable schemes and mechanism which could automatically configure the network whenever necessary. This can be realized by SON, which can be realized as a set of algorithms and protocols performing the task of automatic network tuning, planning, configuration, and parameter settings. In order to accomplish this, the SON node requires measurement reports and results from other nodes such as UEs and base stations.

### Timing and positioning measurements based on RACH

In LTE the following positioning measurements which comprise both UL and DL measurement components are standardized in release 9. The following measurements can be performed on signals transmitted on RACH in the UL and on any suitable signals on the DL:
- UE Rx-Tx time difference measurement;
- eNodeB Rx-Tx time difference measurement;
- Timing advance (TA) measurement.

These measurements are similar or analogous to the Round Trip Time (RTT) measurements in earlier systems.

Another timing measurement which can be measured on signals transmitted on RACH is one-way propagation delay. The one way propagation delay is typically measured by the base station. However it can also be measured by the UE. In UTRAN the Physical RACH (PRACH) propagation delay is a standardized measurement. In LTE the measurement is done internally by the eNodeB. The measurement can be used for positioning or for other purposes such as determination of TA.

One common aspect of the above mentioned measurements is that they are performed on signals transmitted on both DL and UL transmissions and thus could use RACH signal for the UL measurements. These measurements can be used for timing synchronization, positioning, and other purposes such as link maintenance.

For UE Rx-Tx, the UE measures the difference between the time of the received DL transmission that occurs after the UE UL transmission and the time of the UL transmission. Either eNodeB or the positioning node can request the UE to perform the UE Rx-Tx time difference measurement. For eNodeB Rx-Tx, the eNodeB measures the difference between the time of the received UL transmission that occurs after the eNodeB DL transmission and the time of the DL transmission. A positioning node can also request this measurement for the purpose of positioning. There may be similar UE and BS measurements involving measurements on RACH signals in the future.

### Carrier Aggregation (CA)

Embodiments of the invention described herein apply for non-CA and CA networks. The CA concept is briefly explained hereinafter.

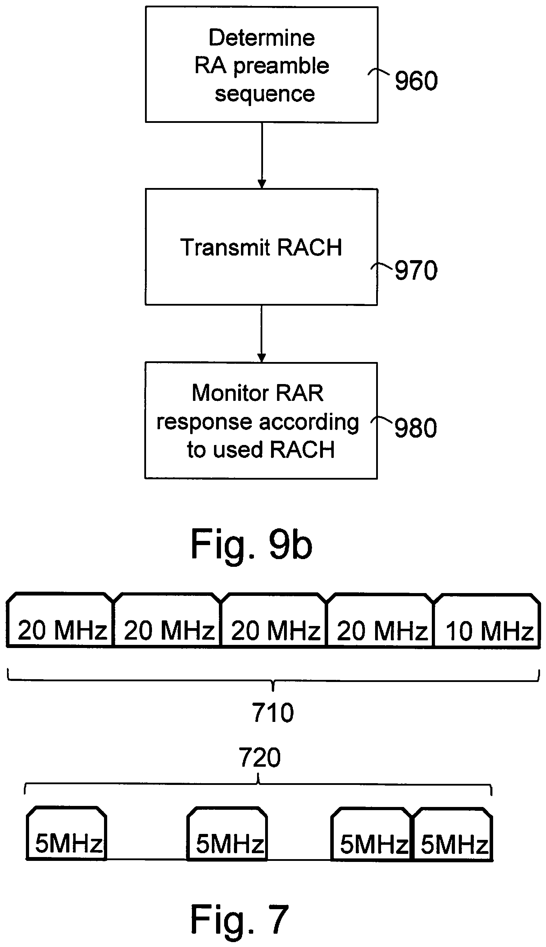

A multi-carrier system, interchangeably referred to as a CA system, allows the UE to simultaneously receive and/or transmit data over more than one carrier frequency. Each carrier frequency is often referred to as a Component Carrier (CC) or simply a serving cell in the serving sector, more specifically a primary serving cell or secondary serving cell. The multi-carrier concept is used in LTE release 10 and onwards. CA is supported for both contiguous 710 and non-contiguous 720 component carriers, as illustrated in **Figure 7****.** For non-contiguous CA, the CCs may or may not belong to the same frequency bands. The CCs originating from the same eNodeB need not provide the same coverage.

For a UE in RRC_CONNECTED state not configured with CA there is only one serving cell comprising of the primary cell. For a UE in RRC_CONNECTED configured with CA the term *serving cells* is used to denote the set of one or more cells comprising of a primary cell and all secondary cells. The Primary Cell (Pcell) is the cell, operating on the primary frequency, in which the UE either performs the initial connection establishment procedure or initiates the connection re-establishment procedure, or the cell indicated as the primary cell in the handover procedure. A Secondary Cell (Scell) is a cell, operating on a secondary frequency, which can be configured once an RRC connection is established and which can be used to provide additional radio resources.

In the DL, the carrier corresponding to the PCell is the Downlink Primary Component Carrier (DL PCC) while in the UL it is the Uplink Primary Component Carrier (UL PCC). Depending on UE capabilities, SCells can be configured to form together with the PCell a set of serving cells. In the DL, the carrier corresponding to SCell is a Downlink Secondary Component Carrier (DL SCC) while in the UL it is an Uplink Secondary Component Carrier (UL SCC).

The CA can also be IRAT CA. In this case the CCs can belong to different RATs. The IRAT CA can be used in the DL and/or in the UL. A well-known example is a combination of LTE and HSPA carriers. In this case the Pcell and Scell can belong to carriers of any of the RATs.

### Mobility Scenarios Involving RA Procedure

The basic mobility scenarios comprises intra-frequency cell selection, intra-frequency cell change such as handover and cell reselection, intra-frequency RRC re-establishment, and intra-frequency redirection upon RRC connection release. During these basic mobility scenarios the UE in LTE uses the RA procedure for accessing the target cell. However the UE can also use the RA procedure for accessing a target cell in the following more advanced mobility scenarios:
- Inter-frequency mobility scenario;
- Inter-RAT E-UTRAN mobility scenario, e.g. UE in UTRAN accesses a E-UTRA cell for cell reselection or handover;
- Multi-carrier mobility scenario, e.g. UE performs handover from Pell to Scell;

### Testing of UE Procedures and UE Requirements

Different types of UE performance requirements are specified in the standard. In order to ensure that a UE meets these requirements, appropriate and relevant test cases are also specified. The tests are also done to verify that the UE implements protocols, procedures, and signaling. The objective of UE performance verification or the so-called UE performance tests is to verify that the UE fulfills the desired performance requirements in a given scenario, condition and channel environment. By desired performance requirements it is meant those specified in the standard or requested by an operator or by any prospective customer. The performance requirements span a very vast area of UE requirements, such as:
- UE Radio Frequency (RF) receiver requirements such as receiver sensitivity;
- UE RF transmitter requirements such as UE transmit power accuracy;
- UE demodulation requirements such as achievable throughput;
- Radio node RF receiver requirements, e.g. for relays;
- Radio node RF transmitter requirements, e.g. for relays;
- Radio resource management requirements such as handover delay, or random access delay.

Some examples of protocol or procedure testing are testing of RA procedures, and measurement procedures.

The UE verification may be classified into two categories: verification in lab, or verification in a real network. In the verification in lab, the base station or a network node is emulated by test equipment, which is often termed as System Simulator (SS). Thus all downlink transmission is done by the test equipment to the test UE. The SS or test equipment can transmit to and receive signals from the UE. During a test all common and other necessary UE specific control channels are transmitted by the test equipment. In addition a data channel, such as PDSCH in E-UTRAN, is also needed to send necessary data and configure the UE. Furthermore, a single UE is typically tested at a time.

### Problems with existing solutions

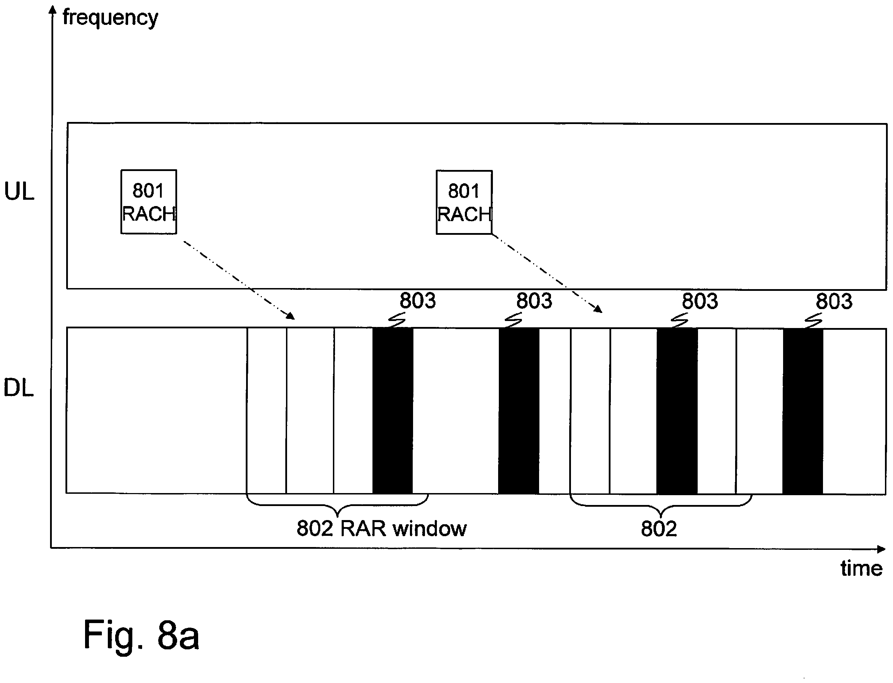

The RA procedure as defined in a prior art cellular system is not suitable for Heterogeneous Networks (HetNet). Figure 8a illustrates the RA procedure in LTE according to 3GPP Release 10. When the UE needs to access to the system, it has to transmit a RA signal on the RACH 801. The RACH is using 6 RBs and its time-frequency position is configured by the eNodeB. The configuration is based on information transmitted on the broadcast channels in Master Information Blocks, MIB and System Information Blocks, SIB. Once the UE has transmitted the RA on the RACH 801 it has to wait for a RAR. Again according to the information in the SIBs, a RAR window 802 is defined, i.e. a certain number of consecutive sub frames that the UE needs to monitor for reception of the RAR. Using a RAR window instead of a dedicated subframe for RAR makes it possible for the eNodeB to schedule the RAR transmission so that optimized system capacity can be achieved. Some problems have been identified with the procedures above. RARs are not coordinated and not aligned with DL ABS 803 for UEs. This leads to poor DL reception performance of RAR in high DL interference conditions. In a HetNet scenario in case a terminal located in the expanded cell range zone attempts RA in a pico cell or in a cell of any low power node, it is possible that the RAR is not transmitted in a DL ABS subframe or in any low interference subframe. This will lead to loss of RAR due to high interference from the macro cell DL transmission making it likely that the RAR is missed. Furthermore, the eNodeB typically does not know if the UE is in the expanded cell range zone or not. This is especially the case if the UE is in idle mode and makes a first RA for connection setup. In this case the UE is not known on a cell level. One naive solution to this problem is that the pico cell schedules all RAR in the ABS sub frames. However, with such a solution, there is a large risk of capacity problems in the ABS subframes in case of high cell load.

Furthermore, there is insufficient information in the network to discriminate among victim and non-victim UEs, which means that the network does not know if there is a need for sending the RAR in a low interference subframe. One solution may be to let the eNodeB distinguish between victim RRC_IDLE UE and non-victim RRC_IDLE UE. However, such a solution requires that the eNodeB knows about the victim UEs which are in idle mode, and the eNodeB does typically not know in which cell an idle mode UEs is.

Furthermore, the solution also requires that the victim UE monitors RAR in all subframes, which increases the UE processing which increases the UE energy consumption and drains the UE battery life.

HUAWEI ET AL, "Random access for handover in co-channel HetNet", 3GPP DRAFT; R2-111017 RANDOM ACCESS ISSUE FOR HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20110215), vol. RAN WG2, no. Taipei, Taiwan; 20110221 discloses a method wherein a UE may indicate to an eNB the need of restricted resource when it initiates random access. This may be achieved by the UE using a special dedicated preamble when it is in the extended range of a pico cell. A victim cell may then identify that this is a victim UE's random access request, and decide it should send RAR messages in ABS to avoid interference from an aggressor cell.

WO2011017281 discloses methodologies that facilitate dynamic selection of a random access channel configuration. A mobile device may measure a characteristic of a radio link between the mobile device and a base station. The measurement may be compared to a set of thresholds provided by the base station. Based upon the comparison, a random access channel configuration may be selected from a set of formats. The selected configuration may be utilized to initiate random access procedures.

### SUMMARY

It is therefore an object to address some of the problems outlined above related to shortcomings in current RA procedures e.g. when applied to heterogeneous networks, and to provide a solution for reliable RA procedures. This object and others are achieved by the methods, the wireless device, the radio network node, and the positioning node according to the independent claims, and by the embodiments according to the dependent claims.

In accordance with a first aspect of embodiments, a method in a wireless device for performing a random access to a cell of a wireless network is provided. The method comprises receiving information from a radio network node comprised in the wireless network, wherein the received information indicates a first and a second random access transmission configuration. The method further comprises selecting one of the first and second random access transmission configurations, and transmitting a random access preamble in accordance with the selected random access transmission configuration.

In accordance with a second aspect of embodiments, a method in a radio network node for enabling a wireless device to perform a random access to a cell of a wireless network is provided. The method comprises transmitting information to the wireless device, wherein the transmitted information indicates a first and a second random access transmission configuration. The method also comprises receiving a random access preamble in accordance with one of the first and second random access transmission configurations. The method further comprises determining whether the first or the second random access transmission configuration is used based on the received random access preamble.

In accordance with a third aspect of embodiments, a method in a positioning node for requesting positioning measurements associated with a random access is provided. The positioning node is connected to a radio network node serving a cell to which a wireless device is performing the random access. The method comprises transmitting information to the radio network node, wherein the transmitted information indicates whether to use a first or a second random access transmission configuration when performing the positioning measurement. The method also comprises receiving a result from the positioning measurement from the radio network node.

In accordance with a fourth aspect of embodiments, a wireless device configured to perform a random access to a cell of a wireless network is provided. The wireless device comprises a receiver configured to receive information from a radio network node comprised in the wireless network. The received information indicates a first and a second random access transmission configuration. The wireless device also comprises a processing circuit configured to select one of the first and second random access transmission configurations, and a transmitter configured to transmit a random access preamble in accordance with the selected random access transmission configuration.

In accordance with a fifth aspect of embodiments, a radio network node configured to enable a wireless device to perform a random access to a cell of a wireless network is provided. The radio network node comprises a transmitter configured to transmit information to the wireless device. The transmitted information indicates a first and a second random access transmission configuration. The radio network node also comprises a receiver configured to receive a random access preamble in accordance with one of the first and second random access transmission configurations. The radio network node further comprises a processing circuit configured to determine whether the first or the second random access transmission configuration is used, based on the received random access preamble.

In accordance with a sixth aspect of embodiments, a positioning node configured to request positioning measurements associated with a random access is provided. The positioning node is connectable to a radio network node serving a cell to which a wireless device is performing the random access. The positioning node comprises a communicating unit configured to transmit information to the radio network node, wherein the transmitted information indicates whether to use a first or a second random access transmission configuration when performing the positioning measurement. The communicating unit is also configured to receive a result from the positioning measurement from the radio network node. The positioning node further comprises a processing circuit for handling the received result.

An advantage of embodiments is that UEs in in high interference conditions, e.g., in a cell range expansion zone of a pico cell suffering from high DL interference from neighbor cells, can perform RAR in protected subframes in which the RAR can be reliably detected thanks to a lowered interference from the macro cell. To protect RACH transmissions, UL low-interference subframes may be configured. RACH and RAR transmissions may be related to each other in a certain way in time.

A further advantage is that the accuracy of positioning measurements using RACH performed by an eNodeB and/or a UE in a heterogeneous network comprising e.g. pico and macro nodes may be improved.

Furthermore, new RA related measurement statistics can be used by a suitable network node, such as a SON, or MDT node, to improve the network planning and/or coverage in heterogeneous network.

Other objects, advantages and features of embodiments will be explained in the following detailed description when considered in conjunction with the accompanying drawings and claims. Even though embodiments have been summarized above, the claimed embodiments are defined by the accompanying claims 1-13.

### BRIEF DESCRIPTION OF THE DRAWINGS

**Figures 1** is a schematic illustration of a GSM or UMTS radio access network.
**Figures 2** is a schematic illustration of an LTE radio access network.
**Figure 3** is a schematic illustration of cell range expansion.
**Figures 4a****-b** are schematic illustrations of interference coordination on data channels.
**Figures 5a****-c** are schematic illustrations of interference coordination on control channels.
**Figures 6a** and **6b** are signaling diagrams for contention based and non-contention based RA procedures respectively.
**Figure 7** is a schematic illustration of carrier aggregation.
**Figure 8a** is a schematic illustration of the RA procedure in LTE according to prior art.
**Figures 8b****-c** are schematic illustrations of the RA procedure in LTE according to embodiments of the invention.
**Figures 9a****-b** are flowcharts illustrating the method according to embodiments.
**Figures 10a****-c** are flowcharts illustrating the method in a wireless device according to embodiments.
**Figures 11a****-c** are flowcharts illustrating the method in a radio network node according to embodiments.
**Figure 12** is a flowchart illustrating the method in a positioning node according to embodiments.
**Figures 13a****-b** are block diagrams schematically illustrating a wireless, a radio network node, and a positioning node according to embodiments.
**Figure 14a** is a schematic illustration of basic LTE DL physical resource as a time-frequency grid of resource elements.
**Figure 14b** is a schematic illustration of the organization over time of an LTE DL OFDM carrier in the frequency division duplex (FDD) mode.
**Figure 14c** is a schematic illustration of the LTE DL physical resource in terms of physical resource blocks.
**Figure 15a** is a block diagram schematically illustrating an example of a portion of transmitter for an eNodeB.
**Figure 15b** is a block diagram schematically illustrating an arrangement in a UE that can implement the methods according to embodiments of the invention.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the embodiments are primarily described in the form of methods and nodes, they may also be embodied in a computer program product as well as in a system comprising a computer processor and a memory coupled to the processor, wherein the memory is encoded with one or more programs that may perform the functions disclosed herein.

Embodiments are described in a non-limiting general context in relation to an example scenario with a RA procedure in an E-UTRAN, such as the network scenario illustrated in **Figure 2****,** where the eNodeB controls the RA procedure. However, it should be noted that the embodiments may be applied to any radio access network technology, with RA procedures similar to those in an E-UTRAN.

The problem of inefficient RA procedures in e.g. a HetNet scenario with pico and macro nodes is addressed by a solution with a new RACH signaling procedure suitable for UEs in high interference conditions. One example scenario is the expanded cell range zone in a heterogeneous network, requiring ABS for successful reception. In one embodiment a so called ABS RA takes place in time-frequency resources which are different than the time-frequency resources used by a legacy or normal RA. In another embodiment the ABS RA occurs using the same time-frequency instant as used by the legacy RA. However, in the latter case certain RACH sequences or preambles are allocated only for ABS based RA to identify a UE requiring a RAR in an ABS subframe.

Embodiments of the invention also cover an extended RAR procedure. A so called ABS RAR window is defined as the number of ABS subframes that the UE needs to monitor for a RAR in this extended RAR procedure. The procedure differs from prior art in that the UE may only be required to monitor RAR in DL ABS subframe(s). In prior art, the UE monitors RAR over a RAR window comprising of contiguous subframes regardless of if they are ABS subframes or not.

In other embodiments, methods for performing timing and positioning measurements using the ABS RA and ABS RAR are provided. Both pre-defined rules and associated signaling for both the UE and the network node are disclosed.

The following embodiments of the invention may be viewed as independent embodiments or may be used in combinations:
1. At least two sets of RACH transmissions: A first RACH also referred to as a normal RACH, and a second RACH also referred to as an ABS RACH or a restricted pattern RACH.
2. RAR windows associated with the first and second RACH: A first RAR window also referred to as a normal RAR, associated with the first or second RACH, and a second RAR window also referred to as an ABS RAR or restricted pattern RAR, associated with the second or first RACH.
3. UE discrimination for selecting one of the first or second RACH or RAR based on a threshold. A signal measurement threshold with respect to serving or neighbor cell measurements, and or a speed threshold. A speed threshold may be used such that high-speed UEs use the first RACH or RAR, and lower or medium speed UEs use the second RACH or RAR, or the other way around, depending on the aggressor-victim relation and which one that is the serving cell.
4. RA preamble sequences: Either same RA preambles on the first and second RACH or different sets of RA preambles on the first and second RACH.
5. UE and/or radio network capability of supporting first and second RACH procedures signaled to other nodes.
6. Procedures for improvement of measurement accuracy for measurements involving RA.

The embodiments of the present invention are applicable for both contention based RA and non-contention based RA procedures. Furthermore the embodiments of the present invention are applicable in a wide range of scenarios involving RA, such as initial access, RRC connection re-establishment e.g. after radio link failure, and handover failure, handover, positioning measurements, cell change, re-direction upon RRC connection release, and for attaining UL synchronization, e.g. in long Discontinuous Reception (DRX), after long inactivity, and at data arrival during long inactivity.

To distinguish between the legacy and new RA procedures, the terms first RACH, second RACH, first RAR window and second RAR window are used in the present disclosure. The terms first RACH and first RAR refer to the legacy RACH and legacy RAR respectively. The terms second RACH and second RAR refer to the new RACH and new RAR respectively. Furthermore the terms ABS RACH and ABS RAR are sometimes used for the second RACH and second RAR respectively. Similarly the terms restricted pattern RACH and restricted pattern RAR are also sometimes used for the second RACH and second RAR respectively. This means that the terms second RACH, ABS RACH and restricted pattern RACH may refer to the same RACH, which is the new RACH, also referred to as the new RA transmission configuration. The new RACH may be aligned with UL ABS time-frequency resources in aggressor cells. Similarly the terms second RAR window, ABS RAR window and restricted pattern RAR window may refer to the same RAR window, i.e. the new RAR window, which is the time window which the UE monitors to detect the RAR. The second RAR window is aligned with DL ABS subframes in aggressor cells.

Three examples of embodiments (referred to as embodiments A, B, and C) of the present invention are elaborated hereinafter.

### A. First RACH and second RACH using different RACH resources

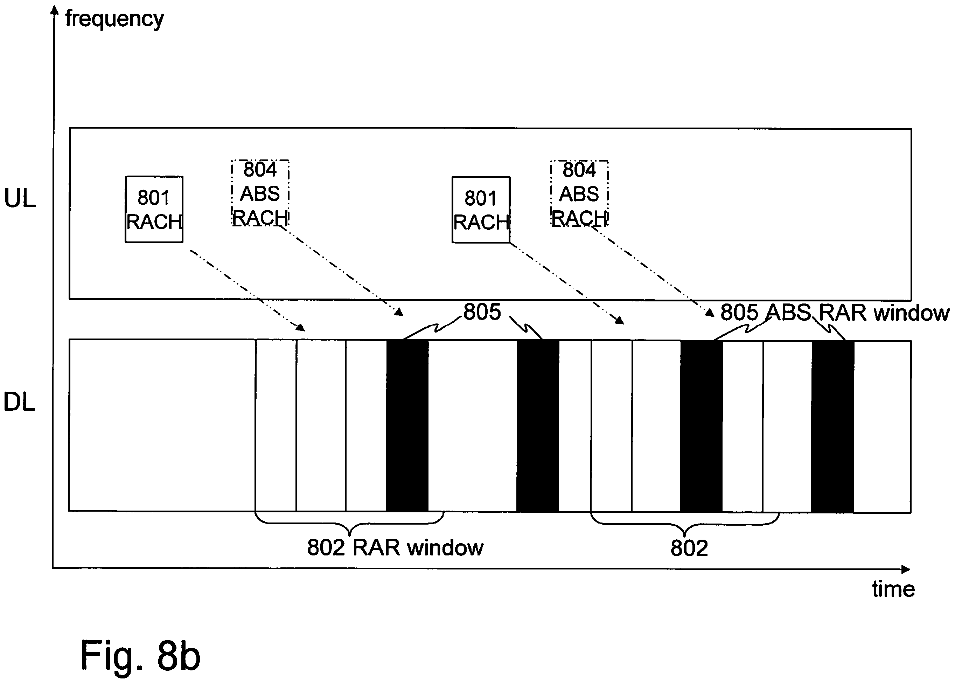

The RACH resource refers to the time-frequency resource over which the UE can send RA preamble for the purpose of RA. **Figure 8b** shows a principal sketch of time-frequency resources used for RACH 801 in the UL, and for RAR windows 802 in the DL, to illustrate embodiment A of the invention.

Embodiment A is particularly useful in scenarios in which a victim cell, such as a pico eNodeB, or a relay node, receives high interference in both DL and UL from an aggressor cell, such as a macro eNodeB, or aggressor UEs, respectively. However, the embodiment is not limited to scenarios with both DL and UL ABS subframes.

According to a first aspect of embodiment A, illustrated in **Figure 8b****,** the first RACH 801, i.e. the legacy RACH, is at a first time-frequency position while the second RACH 804, i.e. the ABS RACH or alternatively the restricted pattern RACH, is configured at a second frequency-time position. The second RACH 804 position overlaps with the UL low interference frequency-time resources, such as the UL ABS associated with aggressor UEs in the aggressor cell(s). This results in low interference at the victim base station when it receives the transmission on the second RACH 804.

The second RACH location is thus suitable for UEs located in the expanded cell range zone. The UE located in this zone needs to transmit at higher output power to successfully perform RA. Furthermore, when interference is high the UE power limitation can lead to RA access failure. Hence, the second RACH is useful for UEs far out in the cell and especially for UEs performing RA during handover.

Another example scenario is when a RACH transmission is protected by transmitting in low-interference subframes configured to protect UE UL transmissions in a femto Closed Subscriber Group (CSG) cell from the interference generated by a nearby non-CSG UE transmitting in UL.

In one embodiment of the invention a signal measurement threshold, such as a path loss or signal strength measurement threshold can be signaled by the network. The signal measurement threshold can also be complemented by signaling UL interference-related information. In one example, if a measured path loss or signal strength is below the corresponding threshold, or the estimated UL signal quality is below a threshold, then the UE may use the second RACH for doing the RA.

It may also be pre-defined that UEs with certain capabilities are recommended to use a second RACH when such a second RACH is configured. For example, all heterogeneous network capable UEs, which are also known as elCIC capable UEs, may use the second RACH when the second RACH is configured. Still another example is that CSG UEs can use the second RACH when the second RACH is configured.

According to a second aspect of the embodiment A, the first RAR window 802, i.e. the legacy RAR, is associated with the first RACH 801, i.e. the legacy RACH, and a second RAR window 805 is associated with the second RACH 804. The second RAR window 805 is a new RAR window also known as an ABS RAR. The second RAR window 805 differs from the prior art in that the second RAR window comprises of a certain number of DL low-interference sub frames. These low-interference subframes are e.g. indicated by a restricted measurement pattern and may thus be non-consecutive. In one example, this means that the RAR in second RAR window 805 is sent by the network node to the UE in one of the victim cell's DL subframes overlapping with the DL ABS subframe in the aggressor cell. Hence the UE performing RA on the second RACH needs to monitor for the RAR over the second RAR window 805, prior to doing a new RA if no RAR has been detected. The RAR transmission over a subframe belonging to the ABS RAR window 805 ensures, or at least increases, the probability that the UE successfully receives the RAR. This in turns reduces an overall delay of the RA procedure.

According to a third aspect of embodiment A, there are three main variants in terms of RA preambles, also known as RA signatures, used by the UE for transmission on the first and second RACH:
1. Common RA preambles;
2. Partitioning of RA preambles;
3. Distinct set of RA preambles.

The three variants are described hereinafter.

### 1. Common RA preambles

In this variant, the same set of RA preambles is used by the UE for RA transmission over the first RACH and over the second RACH. The network node, which in our example embodiment is an eNodeB, can identify whether the received RA preamble is transmitted by the UE over the first RACH or over the second RACH based on their distinct time-frequency position. In response the eNodeB can use the appropriate RAR window for sending the corresponding RAR to the UE. In one exemplary embodiment, the UE1 and UE2 use the same RA preamble, here referred to as P1, for the RA transmission on the first and second RACH respectively. The first and second RACH are configured for transmission over subframe #2 and subframe #4 respectively. Hence the eNodeB can determine based on the location of the received RA that the RAR for the UE1 and UE2 should be transmitted over the first RAR window and the second RAR window respectively. As a result the eNodeB can transmit the RAR on the appropriate RAR window enabling the UEs to receive the correct RAR.

### 2. Partitioning of RA preambles

According to this variant, the available set of RA preambles are divided or partitioned into at least a first and a second group. The partitioning of RA preambles is configured by the network, e.g. by the eNodeB. The first and the second group of RA preambles are used by the UEs for sending RA over the first RACH burst and the second RACH burst respectively. Hence the eNodeB can identify whether the received RA preamble is transmitted by the UE over the first RACH or over the second RACH based both on the distinct time-frequency position of the RACH transmission and on the partitioned preamble grouping of RA preambles received from the UE. Due to the preamble partitioning, the total number of preambles available for the RA transmission on the first RACH and second RACH will be reduced compared to the common RA preamble approach described under bullet 1 above.

### 3. Distinct set of RA preambles

According to this third variant, two distinct set of RA preambles may be configured to circumvent the shortage of the RA preambles due to RA partitioning. The configuration is done by the network node, e.g. the eNodeB. The first and second distinct groups of RA preambles are used by the UEs for sending RA over the first and second RACH burst respectively. Hence the eNode B can identify whether the received RA preamble is transmitted by the UE over the first RACH or on the second RACH based both on the distinct time-frequency position of RACH transmission and on the distinct preamble group of received RA preamble transmitted by the UE. This approach requires the network to correlate over a larger number of pre-defined preambles in the two RACH occasions in order to detect the RA transmitted by the UE.

### B. First RACH and second RACH using common resources

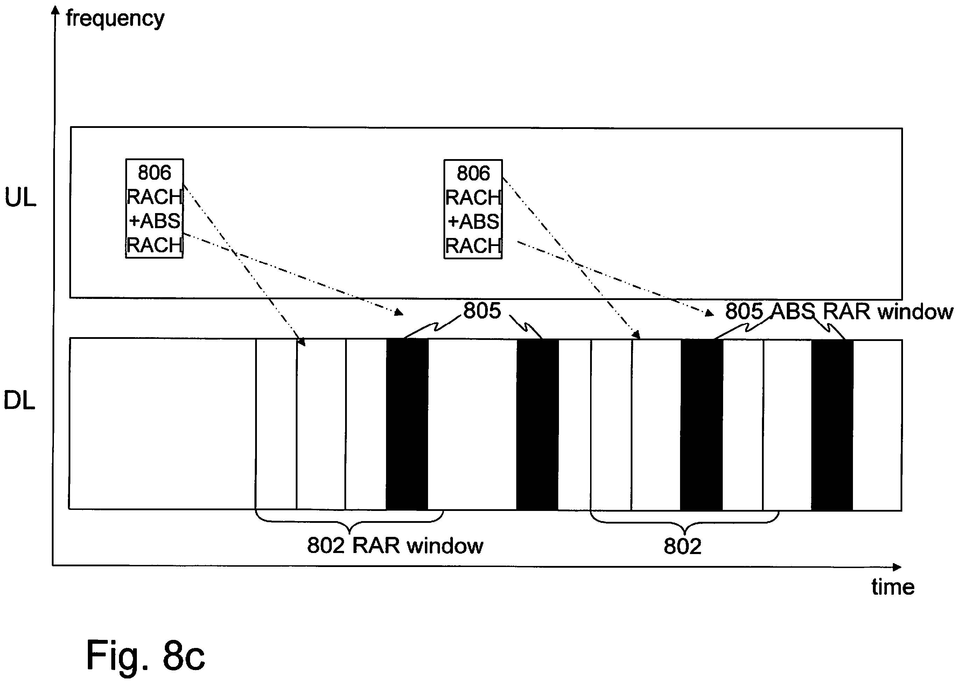

**Figure 8c** shows a principal sketch illustrating embodiment B of the invention. This embodiment B is particularly useful in scenarios in which a victim cell, such as a pico cell, receives high interference in at least DL from the aggressor cell. However there may or may not be high UL interference from an aggressor cell towards the victim cell. According to a first aspect of embodiment B, the same time-frequency position 806 is configured by the network node, e.g. the eNodeB, to be used by the UE for the first RACH transmission, i.e. the legacy or normal RACH, and for the second RACH transmission. It is up to the network whether the UL position is aligned with the UL ABS time-frequency location or any other low-interference time-frequency resource corresponding to the UL transmissions in the aggressor cell or not. In one example, the UL interference in an aggressor cell is high, which may occur when the aggressor cell's UEs operate at higher power, as may be the case in a large cell and/or when there are a large number of UL transmissions in the aggressor cell. The eNodeB in the victim cell may therefore configure the first and second RACH in a position overlapping with the UL ABS in the aggressor cell.

According to a second aspect of embodiment B, the first RAR window 802, i.e. the legacy RAR window, is associated with the first RACH and the second RAR window 805 is associated with the second RACH. The associations are illustrated by the broken arrows in **Figure 8c****.** The second RAR window is a so called ABS RAR window, ensuring that the RAR is sent in a subframe overlapping with a low interference subframe, such as with a DL ABS in an aggressor cell. Hence the RAR window aspect is similar to that in the first embodiment A described above.

A third aspect of embodiment B enables the network node, exemplified by the eNode B, to distinguish between UEs doing RA over the first RACH and the second RACH as described hereinafter. According to the third aspect, there are two main variants in terms of RA preambles or RA signatures used by the UE for the transmission on the first and second RACH:
1. Partitioning of RA preambles;
2. Distinct set of RA preambles.

### 1. Partitioning of RA preambles

According to this variant, the available set of RA preambles are divided into first and second partitioned groups corresponding to the first RACH and second RACH respectively, as described in embodiment A above. The partitioning of RA preambles is also configured by the network, and other principles are the same as described above for embodiment A. The partitioning of the RA preamble enables the network node to identify whether the received RA preamble is sent by the UE in the first RACH or in the second RACH. Accordingly the network node/eNodeB selects the appropriate and relevant RAR window, i.e. the first or second RAR window, 802 and 805 respectively, for transmitting the RAR to the UE.

### 2. Distinct set of RA preambles

According to this second variant, the shortage of the RA preambles is circumvented by configuring a separate distinct set of RA preambles: a first distinct group of RA preambles and a second distinct group of RA preambles. The two distinct RA preambles groups enable the network node to easily distinguish between the preambles received from UEs on a first RACH and the second RACH. The network node can therefore select the appropriate RAR window for the RAR transmission to the UEs.

### C. First and second RACH using different resources with common RAR window

Embodiment C of the present invention is particularly useful in scenarios in which a victim cell, such as a pico cell, receives high interference in UL from the aggressor cell. However there may not be high DL interference from an aggressor cell towards the victim cell. According to embodiment C, the first RACH, i.e. the legacy RACH, and the second RACH, i.e. the ABS RACH or restricted pattern RACH, are configured by the network node over different time-frequency resources, as in embodiment A illustrated in **Figure 8b****.** The second RACH is configured in a time-frequency position aligned with ABS, or a low interference subframe such as a blank MBSFN, in the aggressor cell. However there is common RAR window for both RACH, i.e. a legacy RAR window corresponding to both the first and the second RACH. This means that embodiment C can be implemented when DL interference is low.

Hence, embodiment C is a combination of embodiment A in terms of distinct RACH resources, and a legacy solution in terms of a common RAR window regardless of the which one of the distinct RACH resources that is used.

Furthermore, the network node may also use any of the methods for configuring the RA preambles described earlier: Common RA preambles, partitioning of RA preambles, or distinct sets of RA preambles. Since the network uses the same RAR window for the RAR response, the network may preferably use the first of these approaches for configuring the RA preambles for the first and second RACH, i.e. the method using common RA preambles.

### Signaling and configuration procedures

### Radio interface signaling for configuring RACH

In order to realize any of the above RACH procedures in the heterogeneous network, the network node can signal the relevant configuration and associated parameters to the UE over the radio interface. The network node can be a serving network node, such as a serving eNodeB, or it can also be a neighboring network node, such as a neighboring eNodeB. The latter signals parameters and configuration information to the UE at the time of handover, or at any action related to a cell change. The signaling can take place over a transparent container via a serving eNodeB in LTE. Furthermore, parameters and configuration information can be sent as a part of the mobility control information. Alternatively, it can be sent using independent signaling, or combined or piggybacked with other signaling. The signaling over the radio interference may take place over a suitable protocol, such as RRC, Medium Access Control (MAC), or L1/L2 control channels. Examples of L1/L2 control channels are PDCCH and PUCCH.

Furthermore, the information can be signaled to the UE in connected mode, in idle mode, or in any other low activity state. In the connected mode case the information can be signaled to the UE by multiplexing it over a UE specific channel such as the Physical DL Shared Channel (PDSCH). In idle or low activity state the information is signaled to the UE over a common channel such as a broadcast channel. For example one or more system information blocks (SIBs) can be used to carry the information to the UE in idle mode.

Examples of information associated with the RACH to be signaled to the UE are given hereinafter:
- *RACH configurations*: The network node may signal the detailed configuration of the first and second RACH when they are configured in a cell. Additionally the network node can also signal an indicator or any other information to inform the UE whether the first RACH and second RACH are used or not in a particular cell.
- *RAR window configurations*: The network node may signal the detailed configuration for the first and second RAR windows. The network node can also signal an indicator or any information to inform the UE about the RAR window configuration. One example is to inform the UE whether the first RACH and second RACH are associated with the first RAR and second RAR windows respectively, or whether both are associated with first RACH window in a particular cell. The above rules may also be pre-defined. It may e.g. be pre-defined that if there are first and second RACH configured, then they are associated with a first RAR window and second RAR window respectively, unless signaling indicate otherwise.
- *RA preamble configuration*: The network node may signal a detailed configuration enabling the UE to derive the RA preambles used to perform the RA using the first and second RACH. The network can also signal an indicator indicating whether RA preambles used are the same or different for RA transmissions using the first and second RACH in a cell. The network can also signal an indicator indicating the exact mode of operation, such as common preambles, partitioned preambles, or distinct set of preambles for RA transmissions using first and second RACH.
- *Measurement threshold*: The network node can signal a measurement threshold to the UE, such as a path loss threshold or a threshold associated with any suitable signal measurement, e.g. a signal strength or signal quality measurement. The UE performs the corresponding measurement, e.g. the path loss measurement, to compare with the signaled threshold in order to decide whether to use the first or second RACH for performing the RA in a cell. The cell can be a serving cell or a target cell. The latter is used when performing e.g. handover, or RRC re-establishment. For example, if the measured quantity is lower than the signaled threshold, the UE uses the second RACH. The thresholds associated with neighbor cells may also be signaled by the serving network node to the UE.

### Exchange of signaling between nodes for configuring RACH

According to an embodiment of the invention, the information associated with the first and second RACH, first and second RAR window, RA preamble allocations for the first and second RACH, and/or the measurement thresholds described in the previous section, is exchanged between the network nodes. For example the information may be exchanged between eNodeBs over the X2 interface, to facilitate various operations such as handover, and cell reselection. The information can be exchanged over X2 in a transparent or non-transparent manner. In the latter case the target eNodeB can use the principle of transparent transmission to convey the information to the UE performing handover or any type of cell change operation.

The network node receiving the configuration information from the neighboring node may use the received information for setting its own parameters. Alternatively, the network node may use the received information when performing handover. For example the network node can avoid using RA preambles which are used or frequently used in neighbor cells for the first RACH and/or for the second RACH. This will result in lower interference and thus a lower probability of false alarm when detecting the RA preamble transmitted by the UE.

### Configuration of low-interference subframes to facilitate RACH performance

The DL low-interference subframes described in the different embodiments of the invention, which determines e.g. RAR windows or RA preamble assignment transmissions, can be any of:
- Restricted measurement subframes configured for a specific UE not in relation to RACH procedures. The restricted measurement subframes may e.g. be configured via dedicated signaling over RRC.
- In one example, the UE accessing a new intra-frequency neighbor cell can use an intra-frequency restricted measurement pattern for measurements on neighbor cells. This may e.g. be the pattern that is configured and used by the UE earlier.
- In another example, the UE accessing a new inter-frequency neighbor cell can use an inter-frequency restricted measurement pattern for measurements on neighbor cells. This may e.g. be the pattern that is configured and used by the UE earlier.
- Restricted measurement subframes configured for a specific UE specifically in relation to RACH procedures.
- Restricted measurement subframes configured for all or a group of UEs in the cell. The restricted measurement subframe configuration may e.g. be broadcasted.

In one specific example, configuring the low-interference subframes may or may not be related to the information elements associated with the transmitted RACH configuration. In another specific example, the configured low-interference subframes can be different for UEs in CONNECTED, UEs in IDLE state or UE in an intermediate / low activity state such as a dormant state. In yet another example the low-interference subframes can be configured in the DL, i.e. for RAR transmission, and/or the UL, i.e. for RACH transmission, after the occurrence of certain number of RA failures. The configuration may be based on a special request from a UE, e.g. when the UE identifies that the RA failure rate exceeds a certain threshold. The configuration may also be based on a determination by the network node, e.g. when the network node identifies that the RA failure rate exceeds a certain threshold.

### Overall low-interference subframe based RA operation

The above sections disclose various embodiments covering different configurations associated with e.g. the first and second RACH and the first and second RAR window. The current section describes overall operations and steps associated with the RA carried out at a radio network node, such as an eNode B, or a relay node, and at a UE or any wireless device.

### Radio network node operation

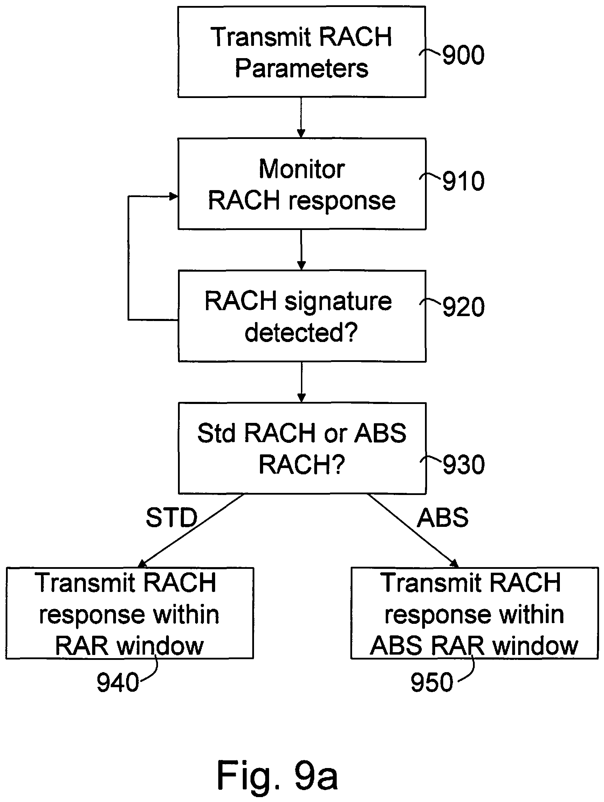

**Figure 9a** is a flow chart illustrating the operation of the radio network node covering the above described embodiments of the invention. The network node transmits, 900, the RACH and ABS RACH parameters on the broadcast channel in SIBs, MIBs, or on similar channels. The parameters and configurations may comprise time-frequency positions, RA preambles or signatures used typically coupled to the network node physical cell identity, and the first and second RAR window configurations. The second RACH may be explicitly pointed out in the frequency-time domain, or may be configured as an offset relative the first RACH or relative a pre-defined reference resource. The pre-defined reference resource can be different or same for FDD and TDD and can be different or same for different channel bandwidths. The network node transmits at least one of DL restricted measurement pattern or UL restricted measurement pattern.

Furthermore, the second RAR window configuration could either point out explicitly the number of restricted subframes overlapping with the ABS sub frames in aggressor cell that the UE should monitor for RAR. Alternatively, the configuration could point out a total number of subframes, including non-ABS, spanning a certain number of ABS sub frames.

In the following steps, the network node monitors the RACH response, 910, at a time instant corresponding to the occurrence of the RACH, and determines, 920, whether a RACH signature has been received. Then a control unit in the network node determines, 930, whether the detected RA signature is a legacy or standard RACH or an ABS RACH. This is determined either based on the detected RA signature or based on the time-frequency position in which the RA signature was received. A combination of the two variants is also possible. In case a legacy RA signature was detected, the network node transmits, 940, the RAR within the legacy RAR window. However in case an ABS RA signature was detected, the RAR is transmitted, 950, in ABS sub frames within the ABS RAR window.

### UE operation

**Figure 9b** is a flow chart illustrating an embodiment of the method in a UE terminal or a remote node. The terminal reads the broadcast channels and determines, 960, the RA preamble sequence to use for contact with the network node. The RACH time-frequency instants are also determined, as well as the RAR windows used. Then the UE determines which RACH to use for connection set up, initial access, or other operations such as RRC re-establishment. This may be based on signal measurements such as path loss, or signal strength measurements, as described earlier. The RA is then transmitted, 970, in the determined RACH. The UE monitors, 980, the RAR response during the RAR windows corresponding to the RACH used by the UE, i.e. the first or second RACH. Once the RAR is detected, the relevant procedure such as the connection setup procedure is executed. In case no response was detected within the RAR window associated with the RACH used for the preamble transmission, the UE may make a new RACH attempt. Initially, that is before step 960 of determining the RA preamble sequence to use, the UE may also obtain information related to a DL restricted measurement pattern and/or an UL restricted measurement pattern. However, not all UEs can require information related to such patterns even though an eNodeB is using ABS patterns. This is because the patterns are used for the victim UEs in the cell range expansion zone (CRE), where the impact of the aggressor cell interference is more severe for the victim UEs. Furthermore even in CRE region there are mixture of new UEs which support the use of a pattern for RACH, and the legacy UEs which don't support the use of a pattern for RACH.

### Methods of obtaining ABS RACH and/or RAR capabilities in network nodes

In one embodiment of the invention, the ABS RACH and/or RAR capabilities are signaled to a network node. Alternatively, the capabilities are pre-defined or associated with a more general capability, such as a capability related to support of DL restricted measurement operation and/or support of UL restricted measurement operation.

A legacy UE will not support the RA operation using the second RACH and/or RAR. Similarly all future UEs may not support the second RACH and/or RAR. Furthermore, not all radio network nodes, such as eNodeBs may support the second RACH and/or RAR operation.

The following exemplary embodiments are possible:
- *UE capability signaling from UE to network node in general*: According to a first aspect of this embodiment the UE reports its capability or an indication whether it supports ABS based RA procedures such as ABS RACH and/or ABS RAR. The indication is sent to one or more of the following network nodes: an eNodeB, a positioning node, an MDT node, an Operations and Support System (OSS) node, a SON node, an O&M node, a network management and planning node.
- *UE capability signaling from UE to network node for certain measurements*: According to a second aspect of this embodiment the UE reports its capability or an indication whether it is capable of performing certain measurement using the ABS based RA procedures such as ABS RACH and/or ABS RAR. The capability indication and if necessary the type of measurement for which the capability applies is sent to one or more of the following network nodes: an eNodeB, a positioning node, an MDT node, an OSS node, a SON node, an O&M node, a network management and planning node.
- *Radio network node capability signaling from radio network node to network node in general*: According to a third aspect of this embodiment the radio network node can report its capability or an indication whether it supports ABS based RA procedures such as ABS RACH and/or ABS RAR. The indication is sent to one or more of the following network nodes: a positioning node, an MDT node, an OSS node, a SON node, an O&M node, a network management and planning node.
- *Radio network node capability signaling from radio network node to network node for certain measurements*: According to a fourth aspect of this embodiment, the radio network node can report its capability or an indication whether it is capable of performing certain measurement using the ABS based RA procedures, such as ABS RACH and/or ABS RAR. The indication and if necessary the indication of the type of the measurement are sent to one or more of the following network nodes: a positioning node, an MDT node, an OSS node, a SON node, an O&M node, a network management and planning node.
- *UE capability signaling from radio network node to network node*: The network node can also have information about the UE capability in terms of ABS RACH and/or RAR operation. Hence according to a fifth aspect of this embodiment the radio network node can report the UE capability or an indication whether a certain UE is capable of using the ABS based RA. The UE capability information or associated indication is sent to one or more of the following network nodes: a positioning node, an MDT node, an OSS node, a SON node, an O&M node, a network management and planning node.
- *UE capability signaling from radio network node to network node for certain measurements*: The network node can also have information about the UE capability in terms of using ABS RACH and/or RAR procedures for performing certain types of measurements. Hence according to a sixth aspect of this embodiment the radio network node can report the UE capability or an indication whether a certain UE is capable of performing a certain measurement using the ABS based RA procedures. The indication and if necessary the indication of the type of the measurement supported by the UE are sent to one or more of the following network nodes: a positioning node, an MDT node, an OSS node, a SON node, an O&M node, a network management and planning node.
- Radio network node capability signaling from radio network node to other radio network node: The described radio network node capabilities, i.e., for ABS RACH and/or RAR operation and for certain measurements involving at least in part any of the ABS RACH and/or RAR aspects, can also be exchanged among radio network nodes.

The network nodes receiving the above mentioned radio network node and/or UE capabilities associated with the ABS RACH and/or RAR are used for suitable actions or tasks as described in the following two sections.

### Methods in positioning node for configuring ABS RACH and/or RAR for positioning measurements

In LTE the positioning node, which in one example is the Enhanced Service Mobile Location Centre (E-SMLC), as well as the radio network node, i.e. the eNodeB, may request the UE to perform certain measurements such as an UE Rx-Tx time difference measurement. Similarly the positioning node can also request the eNodeB to perform certain positioning measurement, e.g., eNodeB Rx-Tx time difference, or TA measurements.

According to one aspect of this embodiment there is an exchange of signaling messages or indicators between the nodes to determine whether one or more positioning measurement associated with the RACH is done using the first RACH, the second RACH, or any of the first and second RACHs. The signaling is exchanged between one or both sets of the following nodes:
- The positioning node and the network node, such as the eNodeB, or the SON;
- The positioning node and the UE.

More specifically the positioning node can request or send an indication to the radio network node to use either the first RACH or the second RACH for a certain UE, when the UE and/or radio network node performs certain positioning measurement which involves RACH. The indication may for example be sent using an LPPa protocol to the eNodeB.

Similarly the positioning node can also request or send an indication to the radio network node to use either the first RAR window or the second RAR window for certain UE when the UE and/or radio network node performs certain positioning measurement which involves RACH.

The UE configured by the positioning node for performing the positioning measurement using RACH can even send an indication to the serving node to initiate the first or second RACH and/or the first or second RAR window. The UE may send this indication based on input received from the positioning node which specifies a type of RACH and/or RAR window. Alternatively, the indication is based on a pre-defined rule (as described below). It is up to the eNodeB to configure the appropriate RACH and/or RAR window for the UE positioning measurement.

The positioning node can even use suitable measurements such as RSRP or RSRQ to decide whether the positioning measurement involving RACH should be done based on the first or second RACH and/or on the first or second RAR. The eNodeB can thus autonomously decide whether to configure ABS RACH/RAR for positioning measurements requested by the positioning node.

It may also be pre-determined that when the UE measurement such as the path loss, signal strength, or signal quality measurement is below a threshold, the eNodeB can configure the UE to perform the positioning measurements using second RACH and/or second RAR window. The rule can also be defined for specific positioning measurement such as TA measurements, or for all measurements.

The eNodeB may also use the principle of the cross layer communication to acquire the higher layer information associated with the positioning measurement involving RACH. The configuration information is sent to the UE over LPP or LPPa protocol by the positioning node. In response the network node can configure for example a suitable RACH and/or RAR window. For example if the UE is in an expanded cell range or in a CSG femto cell, the eNodeB can configure the UE enabling it to perform the positioning measurement using the second RACH and/or second RAR window.

### Methods in network node of ABS RACH / RAR statistics for network management and planning

The radio network node, UE, and positioning node obtain various types of measurement results related to or involving the RACH transmissions. For example the UE can log the RACH failure rate and the associated statistics. Similarly the eNodeB is e.g. aware of the collisions on RA preamble transmissions. The positioning node also contains the UE and eNodeB positioning measurement results of measurements associated with RACH.

According to one embodiment, the measurement statistics from the UE, the eNodeB, and the positioning node may be acquired by one or more of the following nodes either implicitly or based on explicit requests sent by the following nodes: a Donor eNodeB, a SON node, an MDT node, an OSS node, an O&M node, a network configuration node, or a network management and planning node. The MDT node can explicitly configure the UE to log the RACH failure rate over the first and second RACH over certain period of time. The statistics collected by the above nodes can be used for configuring the system parameters associated with e.g. the RA, and/or the RA preamble allocation for the first and second RACH in different cells. In general one or more of the nodes listed above can use the statistics in e.g. dimensioning the overall network nodes, and for coverage planning.

More specifically the obtained statistics can also be used to decide whether first and second RACH are required in a particular cell or not. The obtained statistics can also be used to decide whether first and second RAR window are required in a particular cell. The values of the parameters associated with the RACH and/or RAR window can also be configured based on the obtained statistics. For example if the RA failure rate is high in the second RACH then the number of preambles can be increased for the second RACH.

The above listed network nodes can also provide recommendations for parameter settings and configurations associated with the first and second RACH and/or the first and second RAR window to the radio network node.

### Applicability in Advanced Mobility Scenarios

All previously described embodiments of the present invention, i.e. the RA access procedures and the associated signaling, apply to an intra-frequency scenario as well as to advanced mobility scenarios. Examples of the advanced mobility scenarios are:
- Inter-frequency mobility scenario;
- Inter-RAT E-UTRAN mobility scenario, e.g. when a UE in UTRAN accesses a E-UTRA cell for cell reselection or handover;
- Multi-carrier mobility scenario, e.g. when a UE performs handover from Pcell to Scell.

The RA aspects specific to the above listed scenarios are explained hereinafter.

*Inter-frequency mobility*: In the inter-frequency mobility scenario the UE can access the target inter-frequency cell for various purposes, e.g. for cell reselection, handover, RRC connection re-establishment, and re-direction upon RRC connection release. The heterogeneous deployment can be used on the cells on the target inter-frequency carrier. This means that any combinations of a first RACH, second RACH, a first RAR and a second RAR can be used for RA on the target cell. Hence in all these inter-frequency mobility scenarios for doing RA to the target inter-frequency cell the UE can use any of the RA procedures disclosed herein. The UE can acquire the information associated with the RA configuration for doing the RA on the inter-frequency target cell either via broadcast or UE specific signaling. Furthermore this information can be acquired from the serving cell, e.g. in the case of handover, or by reading system information of the target cell, e.g. in the case of cell reselection in idle mode. The target inter-frequency carrier can be FDD or TDD and the serving carrier can be FDD or TDD. This means that the invention also applies to FDD-FDD, TDD-TDD, FDD-TDD and TDD-FDD inter-frequency scenarios.

*Inter-RAT E-UTRAN mobility*: In an inter-RAT E-UTRAN FDD or TDD mobility scenario the UE can access the target inter-RAT E-UTRAN cell for various purposes, e.g. for cell reselection, handover, RRC connection re-establishment, and re-direction upon RRC connection release. The inter-RAT E-UTRAN mobility means that the UE which is served by a cell on the first RAT performs RA on an E-UTRA target cell. Examples of the first RAT are UTRAN FDD, UTRAN TDD, GSM/EDGE Radio Access Network (GERAN), cdma2000 1xRTT, and High Rate Packet Data (HRPD). The heterogeneous deployment can be used on the cells on the target inter-RAT E-UTRAN carrier. For example any combinations of the first RACH, the second RACH, the first RAR, and the second RAR can be used for RA on the target inter-RAT E-UTRAN cell. Hence in all the above mentioned scenarios associated with the inter-RAT E-UTRAN cell mobility for doing RA to the inter-RAT E-UTRAN target cell the UE can use any of the RA procedures disclosed herein. The UE can acquire the information associated with the RA configuration for doing the RA on the inter-RAT E-UTRAN target cell either via broadcast or UE specific signaling. Furthermore this information can be acquired from the serving cell or by reading system information of the target inter-RAT E-UTRAN cell. Hence one key aspect is that the cell belonging to the first RAT, e.g. UTRAN FDD, can provide the RA configuration information disclosed herein.

*Carrier aggregation mobility*: In CA mobility scenario the UE operating in CA mode can access the target Scell on a secondary carrier for various purpose, e.g. handover, cell reselection, or Pcell switching. As an example, the UE can be explicitly requested to do RA when doing Pcell switching. Hence the UE has to do the RA on Scell. The Scell can belong to the secondary carrier inter-RAT E-UTRAN cell for various purposes, e.g. for cell reselection, handover, RRC connection re-establishment, and re-direction upon RRC connection release. The inter-RAT E-UTRAN mobility means that the UE which is served by a cell on the first RAT and performs RA on E-UTRA target cell. Examples of the first RAT are UTRAN FDD, UTRAN TDD, GERAN, cdma2000 1xRTT, and HRPD. The heterogeneous deployment can be used on the cells on the target inter-RAT E-UTRAN carrier. For example, any combinations of the first RACH, the second RACH, the first RAR, and the second RAR can be used for RA on the target inter-RAT E-UTRAN cell. Hence in all the above mentioned scenarios associated with the inter-RAT E-UTRAN cell mobility for doing RA to the inter-RAT E-UTRAN target cell the UE can use any of the RA procedures disclosed herein. The UE can acquire the information associated with the RA configuration for doing the RA on the Scell or new Pcell in CA from the Pcell, e.g. for HO and Pcell switching. Alternatively, the information is acquired by reading system information of the target Scell, e.g. for cell reselection in idle mode. In case of inter-RAT CA where the Pcell belongs to the second RAT, e.g. UTRAN FDD, UTRAN TDD, GERAN, cdma2000 1xRTT, HRPD, the inter-RAT Pcell may provide the RA configuration information for the E-UTRAN target Scell or new Pcell. The E-UTRAN target Scell or new Pcell can belong to E-UTRA FDD or TDD carrier.

### Applicability in Test Equipment

All the RA procedures disclosed herein may also be implemented in test equipment used for verifying the UE RA requirements, procedures, signaling and protocols. The test equipment is also known as a System Simulator (SS). The RA procedures, protocols, and signaling means associated with the RA procedures disclosed herein will be specified in relevant specifications. Similarly the RA requirements, especially the UE RA requirements, associated with the RA procedures disclosed herein will be specified in the relevant specification.

The various aspects related to the UE RA, including RA procedures, signaling, and RA UE requirements, will be verified for each UE by performing test cases. Hence according to the present embodiment, the test equipment or SS also implements one or more RA procedures. In order to implement these RA procedures, the test equipment or SS will require additional functions such as memory unit(s), and processor(s). To enable testing of the procedures as described above, specification of the corresponding transmission and scheduling patterns may also be required, including general UL ABS patterns and patterns corresponding to first and second RACH and first and second RAR.

### Methods and nodes

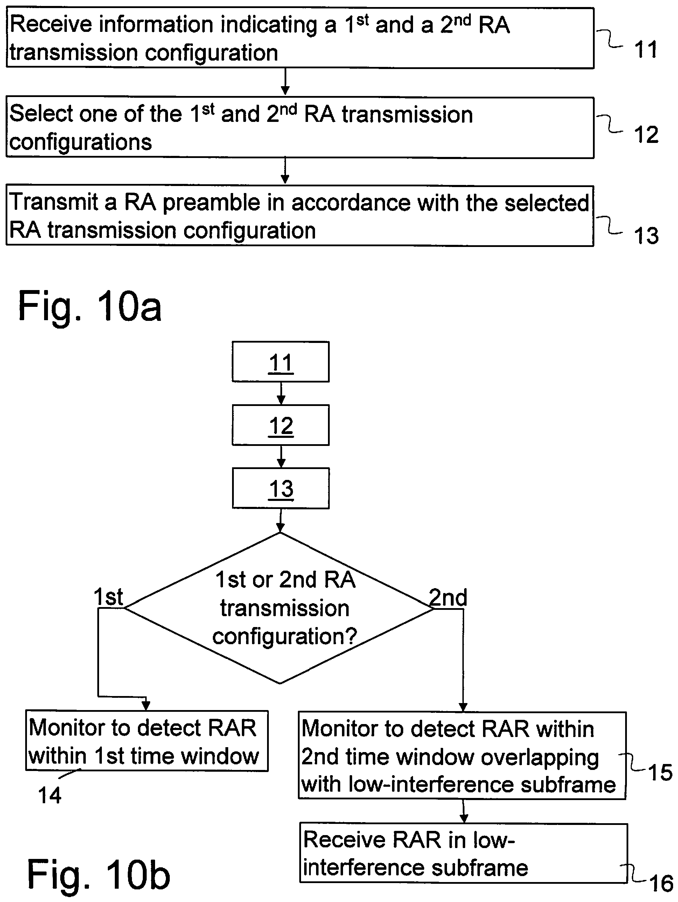

**Figure 10a** is a flowchart illustrating a method in a wireless device for performing a RA to a cell of a wireless network according to embodiments of the invention. The method comprises:
- 11: Receiving information from a radio network node comprised in the wireless network, where the received information indicates a first and a second RA transmission configuration.
- 12: Selecting one of the first and second RA transmission configurations. The selection is in one embodiment based on a capability of the wireless device. Alternatively, the selection may be based on at least one of the following received from the radio network node: a signal measurement threshold for the cell; information related to uplink interference for the cell; an indication whether to use the first or the second RA transmission configuration.
- 13: Transmitting a RA preamble in accordance with the selected RA transmission configuration. The RA preamble may be transmitted to the radio network node, or it may be transmitted to a neighboring radio network node, depending of what the purpose of the RA is, and if the radio network node is the serving node or not. In the latter case, the radio network node may be the serving radio network node and the RA preamble is e.g. sent to a target neighbor radio network node in case of a handover.

**Figure 10b** is a flowchart illustrating one embodiment of the method in the wireless device. The method comprises the following steps in addition to steps 11, 12 and 13, depending on if the first or second RA transmission configuration is selected:
- 14: Monitoring to detect a RAR within a first time window, when the first RA transmission configuration is selected.
- 15: Monitoring to detect the RAR within a second time window, when the second RA transmission configuration is selected. The second time window overlaps with at least one low-interference subframe associated with a neighbor cell. The low interference subframe may be a DL ABS, a blank MBSFN subframe, or a subframe of a restricted measurement subframe pattern.

When the RAR is detected within the second time window, the method also comprises:
- 16: Receiving the RAR from the radio network node in at least one of said low interference subframe(s) within the second time window in response to the transmitted RA preamble.

The method may in one embodiment further comprise receiving information from the radio network node, where the information is related to a configuration of the first and the second time window. Alternatively, the information related to the configuration of the time windows may be pre-determined.

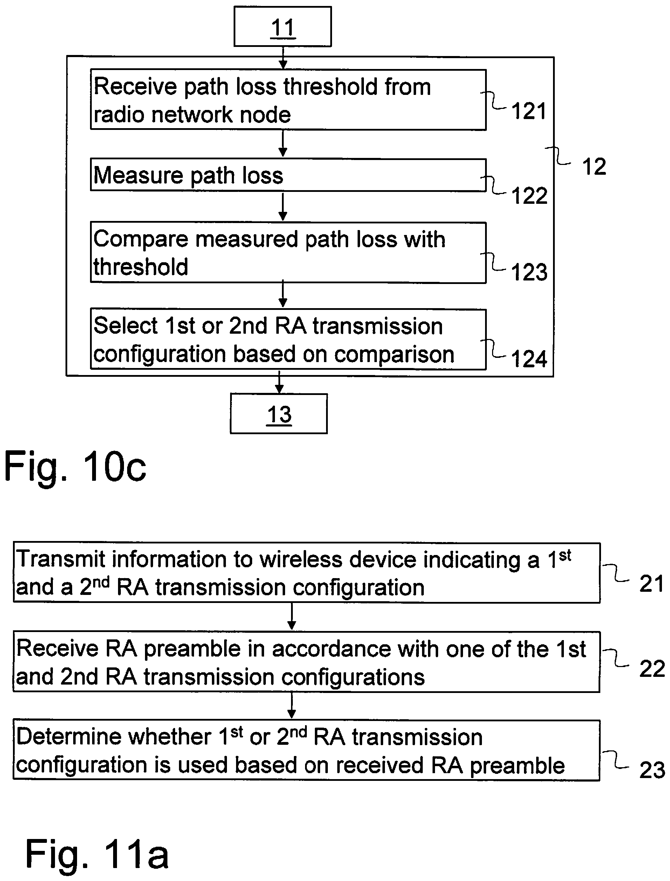

**Figure 10c** is a flowchart illustrating still another embodiment of the method in the wireless device. In this embodiment, the step of selecting, 12, is further detailed. The method comprises:
- 11: Receiving information from a radio network node comprised in the wireless network, where the received information indicates a first and a second RA transmission configuration.
- 12: Selecting one of the first and second RA transmission configurations comprising:
   121: Receiving a path loss threshold from the radio network node.
   122: Measuring a path loss in the cell.
   123: Comparing the measured path loss with the received path loss threshold.
   124: Selecting one of the first and second RA transmissions based on the comparison. As an exemplary embodiment, the first RA transmission configuration is selected when the measured path loss is below the path loss threshold, and the second RA transmission configuration is selected when the measured path loss is equal to or above the path loss threshold.
- 13: Transmitting a RA preamble in accordance with the selected RA transmission configuration.

In a first embodiment, already described with reference to **Figure 8b** above and combinable with any of the above described embodiments, the first RA transmission configuration comprises a first time-frequency resource configured for RA, and the second RA transmission configuration comprises a second time-frequency resource configured for RA, where the second time-frequency resource is overlapping with a low-interference time-frequency resource associated with a neighbor cell. As an exemplary embodiment, the low-interference time-frequency resource is overlapping with an UL ABS used in a neighbor cell.

In addition to, or alternatively to the use of separate time-frequency resources for the first and second RA transmission configuration, different RA preambles may be used for the first and second RA transmission configuration. Accordingly, in one embodiment, the first RA transmission configuration comprises a first set of preambles configured for RA, and the second RA transmission configuration comprises a second set of preambles configured for RA.

As described above, ABS RACH and/or RAR capabilities may be signaled, in order e.g. for the radio network node to know that the wireless device supports ABS RACH and/or RAR. According to embodiments, the method therefore further comprises transmitting information to the radio network node related to a capability of the wireless device to support a RA procedure, where the RA procedure comprises transmission of RA on a channel overlapping with an uplink low interference time-frequency resource in a neighbor cell, and/or reception of a RAR on a channel overlapping with a downlink low interference time-frequency resource in a neighbor cell.

In some cases, the radio network node with which the wireless device communicates for performing a RA is not the serving radio network node. Therefore, in embodiments of the invention the wireless device and the radio network node communicate via a radio network node serving the wireless device.

In one embodiment, covering a handover RA, the cell to which the wireless device performs RA is a target cell in an E-UTRAN. The serving cell of the wireless device may in this embodiment be one of the following: a cell on the same frequency as the target cell, a cell on a different frequency than the target cell, a cell in a different RAT than the target cell, a cell on a CC different than a CC of the target cell in a CA system.

In any of the above described embodiments of the method in the wireless device, the method may further comprise signaling one or more of: the second RA transmission configuration, the wireless device capability and measurement statistics or results related to the second RA transmission configuration to other network nodes for network management and planning. The wireless device signals this via the radio network node. The other network nodes may be positioning nodes, SON, MDT nodes, or coordinating nodes.

**Figure 11a** is a flowchart illustrating a method in a radio network node for enabling a wireless device to perform a RA to a cell of a wireless network according to embodiments of the invention. The method comprises
- 21: Transmitting information to the wireless device, wherein the transmitted information indicates a first and a second RA transmission configuration. This step corresponds to step 11 of the flowchart in Figure 10a.
- 22: Receiving a RA preamble in accordance with one of the first and second RA transmission configurations.
- 23: Determining whether the first or the second RA transmission configuration is used based on the received RA preamble.

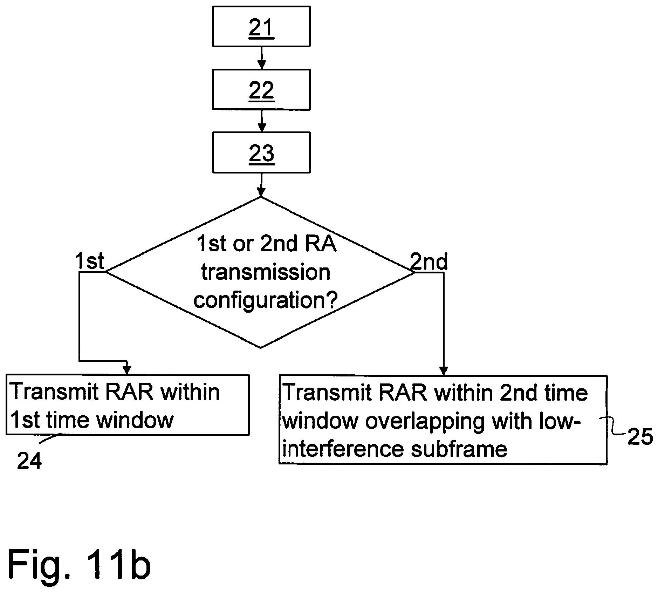

**Figure 11b** is a flowchart illustrating one embodiment of the method in the radio network node. The method comprises the following steps in addition to steps 21, 22 and 23, depending on the RA transmission configuration used:
- 24: Transmitting a RAR in response to the received RA preamble within a first time window, when it is determined that the first RA transmission configuration is used.
- 25: Transmitting a RAR in response to the received RA preamble within a second time window, when it is determined that the second RA transmission configuration is used. The second time window is overlapping with at least one low-interference subframe associated with the neighbor cell. In one embodiment, the RAR is transmitted in a low-interference subframe within the second time window. The low interference subframe may be a DL ABS, a blank MBSFN subframe, or a subframe of a restricted measurement subframe pattern.

The method may in one embodiment further comprise transmitting information to the wireless device or to another network node, where the information is related to a configuration of the first and the second time window. Alternatively, the information related to the configuration of the time windows may be pre-determined.

In a first embodiment, already described with reference to Figure 8b above and combinable with any of the above described embodiments, the first RA transmission configuration comprises a first time-frequency resource configured for RA, and the second RA transmission configuration comprises a second time-frequency resource configured for RA, where the second time-frequency resource is overlapping with a low-interference time-frequency resource associated with a neighbor cell. As an exemplary embodiment, the low-interference time-frequency resource is overlapping with an UL ABS used in a neighbor cell.

In addition to, or alternatively to the use of separate time-frequency resources for the first and second RA transmission configuration, different RA preambles may be used for the first and second RA transmission configuration. Accordingly, in one embodiment, the first RA transmission configuration comprises a first set of preambles configured for RA, and the second RA transmission configuration comprises a second set of preambles configured for RA.

In one embodiment, the method also comprises transmitting to the wireless device at least one of a signal measurement threshold for the cell, and information related to uplink interference for the cell. As described above (e.g. in step 12 described in relation to **Figure 10a** above), the information may be used by the wireless device in order to select between the first and the second RA transmission configuration.

As already described above, the positioning node can request a radio network node such as an eNodeB, or a wireless device to perform certain positioning measurement. Accordingly, in one embodiment the method further comprises receiving information from a positioning node, said information indicating whether to use the first or the second RA transmission configuration when performing a positioning measurement, and forwarding the received information to the wireless device. By forwarding the information to the wireless device, the wireless device may use the knowledge when performing the positioning measurement.

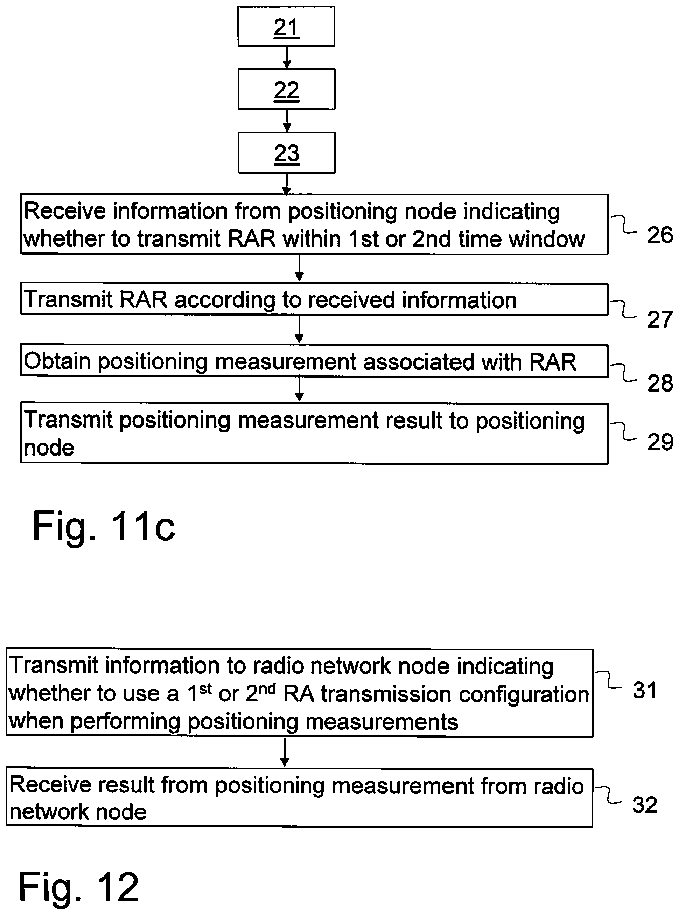

**Figure 11c** is a flowchart illustrating still another embodiment of the method in the radio network node. The positioning node may send an indication to the radio network node to use either the first RAR window or the second RAR window for a certain UE, when the UE and/or the radio network node performs certain positioning measurement which involves RACH. Therefore, in the embodiment of **Figure 11c**, the method comprises the following steps in addition to steps 21, 22 and 23 described above:
- 26: Receiving information from a positioning node, said information indicating whether to transmit a RAR within a first or a second time window, the second time window overlapping with at least one low-interference subframe associated with the neighbor cell.
- 27: Transmitting the RAR in response to the received RA preamble according to the received information.
- 28: Obtaining a positioning measurement result associated with the RAR. Obtaining may either comprise performing the positioning measurement to obtain the result from it, or receive the positioning measurement result from the wireless device that has performed the positioning measurement.
- 29: Transmitting the positioning measurement result to the positioning node.

In order to know if a UE or a radio network node supports the new RA procedure according to embodiments of the invention, signaling of capabilities may be provided. According to embodiments of the invention, the method further comprises receiving information related to a capability of the wireless device to support a RA procedure, where the RA procedure comprises transmission of RA on a channel overlapping with an uplink low interference time-frequency resource in a neighbor cell and/or reception of a RAR on a channel overlapping with a downlink low interference time-frequency resource in a neighbor cell. The information related to the wireless device capability may be received from the wireless device and forwarded to a network node, such as an OSS or SON. However, the information related to the wireless device capability may alternatively be received from other nodes in the network as previously described.

According to another embodiment, the method further comprises transmitting information to a network node, such as an OSS or SON, where the information relates to a capability of the radio network node to support a RA procedure comprising reception of RA on a channel overlapping with an uplink low interference time-frequency resource in a neighbor cell and/or transmission of a RAR on a channel overlapping with a downlink low interference time-frequency resource in a neighbor cell.

In some cases, the radio network node is not the radio network node serving the wireless device performing a RA. Therefore, in embodiments of the invention the radio network node communicates with the wireless device via a radio network node serving the wireless device.

**Figure 12** is a flowchart illustrating a method in a positioning node for requesting positioning measurements associated with a RA according to embodiments of the invention. The positioning node is connected to a radio network node serving a cell to which a wireless device is performing the RA. The positioning node may be connected to the radio network node indirectly, i.e. via another network node. The method comprises:
- 31: Transmitting information to the radio network node, wherein the transmitted information indicates whether to use a first or a second RA transmission configuration when performing the positioning measurement. The positioning node may have decided whether to use the first or the second RA transmission configuration based on at least one of a wireless device capability, and a radio network node capability. The capabilities may be received from the wireless device, the radio network node, or another network node such as the SON, or MDT node.
- 32: Receiving a positioning measurement result from the radio network node.

In one embodiment, the first RA transmission configuration comprises a first time-frequency resource configured for RA. The second RA transmission configuration comprises a second time-frequency resource configured for RA, the second time-frequency resource overlapping with a low-interference time-frequency resource associated with a neighbor cell. The low-interference time-frequency resource may overlap with an UL ABS used in a neighbor cell. Alternatively or additionally, the first RA transmission configuration may comprise a first set of preambles configured for RA, and the second RA transmission configuration may comprise a second set of preambles configured for RA.

In one embodiment, the transmitted information further indicates whether to use a first or a second time window for a RAR when performing the positioning measurement. The second time window overlaps with at least one low-interference subframe associated with the neighbor cell.

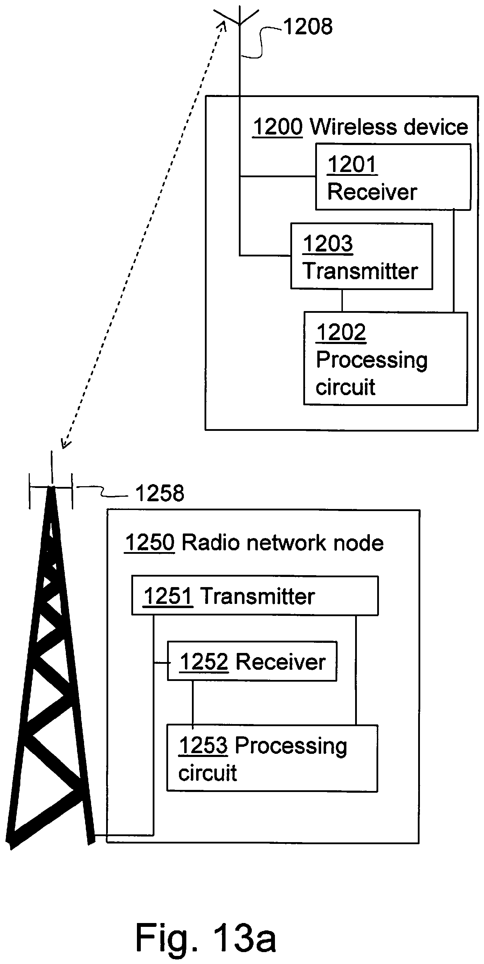

An embodiment of a wireless device 1200 and a radio network node 1250 is schematically illustrated in the block diagram in **Figure 13a****.** The wireless device 1200 is configured to perform a RA to a cell of a wireless network. The wireless device comprises a receiver 1201 configured to receive information from a radio network node comprised in the wireless network, wherein the received information indicates a first and a second RA transmission configuration. The wireless device also comprises a processing circuit 1202 configured to select one of the first and second RA transmission configurations, and a transmitter 1203 configured to transmit a RA preamble in accordance with the selected RA transmission configuration. The wireless device may also comprise one or more antennas 1208 used for the communication with a radio network node. The antenna(s) are connected to the receiver 1201 and the transmitter 1203 via one or more antenna ports.

In one embodiment, the processing circuit 1202 is further configured to monitor to detect a RAR within a first time window when the first RA transmission configuration is selected. The processing circuit is also configured to monitor to detect the RAR within a second time window when the second RA transmission configuration is selected. The second time window overlaps with at least one low-interference subframe associated with the neighbor cell.

In another embodiment, the receiver 1201 is further configured to receive the RAR from the radio network node in at least one of said low interference subframe(s) within the second time window in response to the transmitted RA preamble, when the RAR is detected within the second time window. The low interference subframe may be a DL ABS, a blank MBSFN subframe, or a subframe of a restricted measurement subframe pattern.

The receiver may be further configured to receive information from the radio network node, related to a configuration of the first and the second time window. Furthermore, the processing circuit 1202 may be configured to select one of the first and second RA transmission configurations based on a capability of the wireless device. Alternatively or additionally, the processing circuit 1202 may be configured to select one of the first and second RA transmission configurations based on at least one of the following received from the radio network node: a signal measurement threshold for the cell; information related to uplink interference for the cell; an indication whether to use the first or the second RA transmission configuration.

In one embodiment, the receiver 1201 is configured to receive a path loss threshold from the radio network node, and the processing circuit is configured to select one of the first and second RA transmission configurations by being configured to measure a path loss in the cell, compare the measured path loss with the received path loss threshold, and select one of the first and second RA transmissions based on the comparison.

As already explained previously when describing the methods according to embodiments of the invention, the first RA transmission configuration may comprise a first time-frequency resource configured for RA, and the second RA transmission configuration may comprise a second time-frequency resource configured for RA, the second time-frequency resource overlapping with a low-interference time-frequency resource associated with a neighbor cell. The low-interference time-frequency resource may overlap with an UL ABS used in a neighbor cell. In addition to, or alternatively to the use of separate time-frequency resources for the first and second RA transmission configuration, different RA preambles may be used for the first and second RA transmission configuration. Accordingly, in one embodiment, the first RA transmission configuration comprises a first set of preambles configured for RA, and the second RA transmission configuration comprises a second set of preambles configured for RA.

Furthermore, the transmitter 1203 may be configured to transmit the RA preamble to the radio network node, or to a neighboring radio network node.

In one embodiment, the transmitter 1203 is further configured to transmit information to the radio network node related to a capability of the wireless device to support a RA procedure comprising transmission of RA on a channel overlapping with an uplink low interference time-frequency resource in a neighbor cell and/or reception of a RAR on a channel overlapping with a downlink low interference time-frequency resource in a neighbor cell.

The wireless device and the radio network node may communicate via a radio network node serving the wireless device.

Also illustrated in **Figure 13a****,** is a radio network node 1250. The radio network node 1250 is configured to enable a wireless device to perform a RA to a cell of a wireless network. The radio network node comprises a transmitter 1251 configured to transmit information to the wireless device, wherein the transmitted information indicates a first and a second RA transmission configuration. The radio network node also comprises a receiver 1252 configured to receive a RA preamble in accordance with one of the first and second RA transmission configurations, and a processing circuit 1253 configured to determine whether the first or the second RA transmission configuration is used, based on the received RA preamble. The radio network node may also comprise one or more antennas 1258 used for the communication with a wireless device. The antenna(s) are connected to the receiver 1252 and the transmitter 1251 via one or more antenna ports.

In one embodiment, the transmitter 1251 is further configured to transmit a RAR in response to the received RA preamble within a first time window, when it is determined that the first RA transmission configuration is used. The transmitter 1251 is also configured to transmit a RAR in response to the received RA preamble within a second time window, when it is determined that the second RA transmission configuration is used. The second time window is overlapping with at least one low-interference subframe associated with the neighbor cell. Furthermore, the transmitter 1251 may be configured to transmit the RAR in a low-interference subframe within the second time window, when it is determined that the second RA transmission configuration is used. The low interference subframe may be a DL ABS, a blank MBSFN subframe, or a subframe of a restricted measurement subframe pattern.

In one embodiment, the transmitter is further configured to transmit information to the wireless device or to another network node, said information being related to a configuration of the first and the second time window.

As already explained previously, the first RA transmission configuration may comprise a first time-frequency resource configured for RA, and the second RA transmission configuration may comprise a second time-frequency resource configured for RA, the second time-frequency resource overlapping with a low-interference time-frequency resource associated with a neighbor cell. The low-interference time-frequency resource may overlap with an UL ABS used in a neighbor cell. In addition to, or alternatively to the use of separate time-frequency resources for the first and second RA transmission configuration, different RA preambles may be used for the first and second RA transmission configuration. Accordingly, in one embodiment, the first RA transmission configuration comprises a first set of preambles configured for RA, and the second RA transmission configuration comprises a second set of preambles configured for RA.

The transmitter 1251 may be further configured to transmit to the wireless device at least one of a signal measurement threshold for the cell, and information related to uplink interference for the cell.

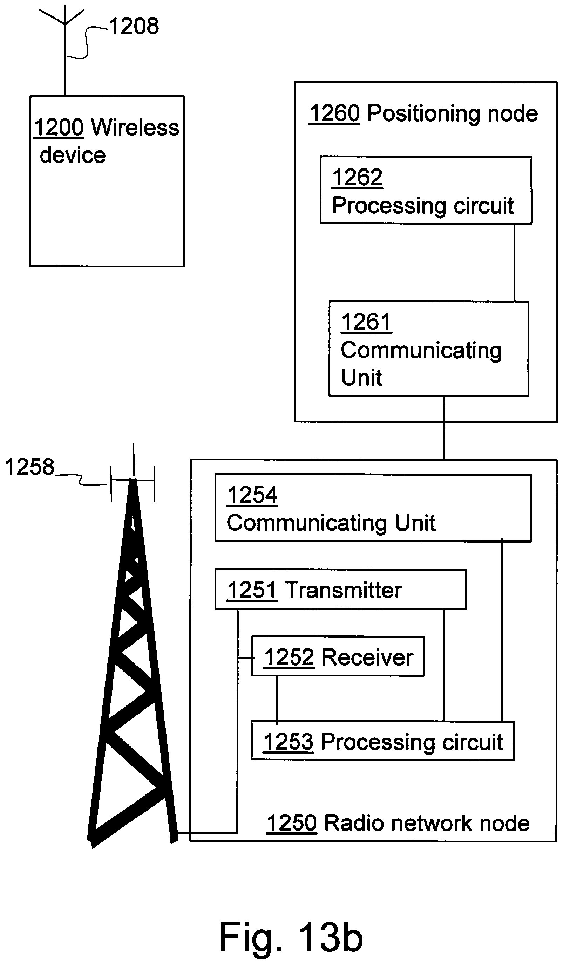

In one embodiment, illustrated in **Figure 13b****,** the radio network node 1250 further comprises a communicating unit 1254 configured to receive information from a positioning node 1260, said information indicating whether to use the first or the second RA transmission configuration when performing a positioning measurement. The transmitter is further configured to forward the received information to the wireless device 1200.

In another embodiment of the present invention, the radio network node 1250 further comprises a communicating unit 1254 configured to receive information from a positioning node 1260. The information indicates whether to transmit a RAR within a first or a second time window, the second time window overlapping with at least one low-interference subframe associated with the neighbor cell. The transmitter 1251 is configured to transmit the RAR in response to the received RA preamble according to the received information. Furthermore, the processing circuit 1253 is configured to obtain a positioning measurement result associated with the RAR, and the communicating unit 1254 is configured to transmit the positioning measurement result to the positioning node.

The receiver 1252 may be further configured to receive information related to a capability of the wireless device to support a RA procedure comprising transmission of RA on a channel overlapping with an uplink low interference time-frequency resource in a neighbor cell and/or reception of a RAR on a channel overlapping with a downlink low interference time-frequency resource in a neighbor cell. In one embodiment, the communication unit 1254 is configured to forward the information related to the wireless device capability to a network node, e.g. when the information is received from the wireless device 1200.

In a further embodiment, the radio network node comprises a communicating unit 1254 configured to transmit information to a network node, said information relating to a capability of the radio network node to support a RA procedure comprising reception of RA on a channel overlapping with an uplink low interference time-frequency resource in a neighbor cell and/or transmission of a RAR on a channel overlapping with a downlink low interference time-frequency resource in a neighbor cell.

In one embodiment, the radio network node communicates with the wireless device via a radio network node serving the wireless device.

A positioning node 1260 is also illustrated in the block diagram of **Figure 13b****.** The positioning node 1260 is configured to request positioning measurements associated with a RA. The positioning node 1260 is connectable to a radio network node 1250 serving a cell to which a wireless device 1200 is performing the RA. The positioning node comprises a communicating unit 1261 configured to transmit information to the radio network node, wherein the transmitted information indicates whether to use a first or a second RA transmission configuration when performing the positioning measurement. The communicating unit 1261 is also configured to receive a positioning measurement result from the radio network node. The positioning node further comprises a processing circuit 1262 for handling the received result.

As already explained previously, the first RA transmission configuration may comprise a first time-frequency resource configured for RA, and the second RA transmission configuration may comprise a second time-frequency resource configured for RA, the second time-frequency resource overlapping with a low-interference time-frequency resource associated with a neighbor cell. The low-interference time-frequency resource may overlap with an UL ABS used in a neighbor cell. In addition to, or alternatively to the use of separate time-frequency resources for the first and second RA transmission configuration, different RA preambles may be used for the first and second RA transmission configuration. Accordingly, in one embodiment, the first RA transmission configuration comprises a first set of preambles configured for RA, and the second RA transmission configuration comprises a second set of preambles configured for RA.

In one embodiment, the communicating unit 1261 is configured to transmit information further indicating whether to use a first or a second time window for a RAR when performing the positioning measurement, wherein the second time window overlaps with at least one low-interference subframe associated with the neighbor cell.

In an alternative way to describe the embodiment of the wireless device in **Figure 13a****,** the wireless device 1200 comprises a Central Processing Unit (CPU) which may be a single unit or a plurality of units. Furthermore, the wireless device 1200 comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the wireless device 1200 causes the CPU to perform steps of the procedure described earlier in conjunction with **Figure 10a****.** In other words, when said code means are run on the CPU, they correspond to the processing circuit 1202 of **Figure 13a****.** The processing circuit 1202, the transmitter 1203 and the receiver 1201, described above with reference to **Figure 13a** may be logical units, separate physical units or a combination of both logical and physical units.

In an alternative way to describe the embodiment of the radio network node 1250 in **Figures 13a****-b,** the radio network node comprises a Central Processing Unit (CPU) which may be a single unit or a plurality of units. Furthermore, the radio network node 1250 comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the radio network node 1250 causes the CPU to perform steps of the procedure described earlier in conjunction with **Figure 11a****-b.** In other words, when said code means are run on the CPU, they correspond to the processing circuit 1253 of **Figures 13a****-b.** The processing circuit 1253, the receiver 1252, the communicating unit 1254, and the transmitter 1251, described above with reference to **Figures 13a****-b** may be logical units, separate physical units or a combination of both logical and physical units.

Furthermore, in an alternative way to describe the embodiment of the positioning node 1260 in **Figure 13b****,** the positioning node 1260 comprises a Central Processing Unit (CPU) which may be a single unit or a plurality of units. Furthermore, the positioning node 1260 comprises at least one computer program product (CPP) in the form of a non-volatile memory, e.g. an EEPROM (Electrically Erasable Programmable Read-Only Memory), a flash memory or a disk drive. The CPP comprises a computer program, which comprises code means which when run on the positioning node 1260 causes the CPU to perform steps of the procedure described earlier in conjunction with **Figure 12****.** In other words, when said code means are run on the CPU, they correspond to the processing circuit 1262 of **Figure 13b****.** The processing circuit 1262 and the communicating unit 1261, described above with reference to **Figure 13b** may be logical units, separate physical units or a combination of both logical and physical units.

LTE uses Orthogonal Frequency Division Multiplex (OFDM) in the DL from an eNodeB to UEs or terminals, in its cell, and discrete Fourier transform (DFT)-spread OFDM in the UL from a UE to an eNodeB. LTE communication channels are described in 3GPP Technical Specification (TS) 36.211 V9.1.0, Physical Channels and Modulation (Release 9) (Dec. 2009) and other specifications. For example, control information exchanged by eNodeBs and UEs is conveyed by physical uplink control channels (PUCCHs) and by physical downlink control channels (PDCCHs).

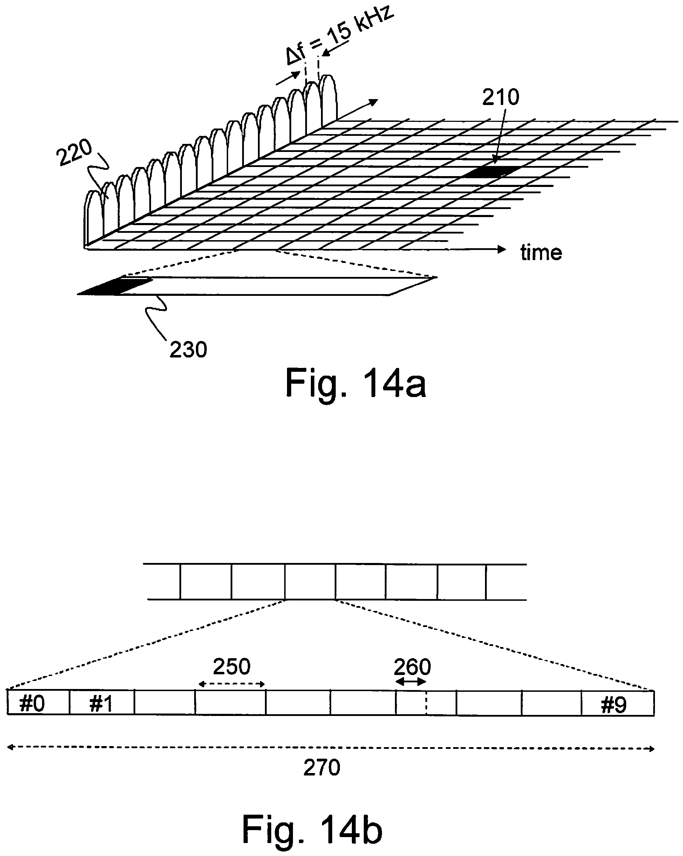

**Figure 14a** depicts the basic LTE DL physical resource as a time-frequency grid of resource elements (RE) 210, in which each RE 210 spans one OFDM subcarrier 220 (frequency domain) for one OFDM symbol 230 (time domain). The subcarriers, or tones, are typically spaced apart by fifteen kilohertz (kHz). In an Evolved Multicast Broadcast Multimedia Services (MBMS) Single Frequency Network (MBSFN), the subcarriers are spaced apart by either 15 kHz or 7.5 kHz. A data stream to be transmitted is portioned among a number of the subcarriers that are transmitted in parallel. Different groups of subcarriers can be used at different times for different purposes and different users.

**Figure 14b** generally depicts the organization over time of an LTE DL OFDM carrier in the FDD mode of LTE according to 3GPP TS 36.211. The DL OFDM carrier comprises a plurality of subcarriers within its bandwidth as depicted in **Figure 14a****,** and is organized into successive frames 270 of 10 milliseconds (ms) duration. Each frame 270 is divided into ten successive subframes 250, and each subframe 250 is divided into two successive time slots 260 of 0.5 ms. Each slot 260 typically includes either six or seven OFDM symbols 230, depending on whether the symbols include long (extended) or short (normal) cyclic prefixes.

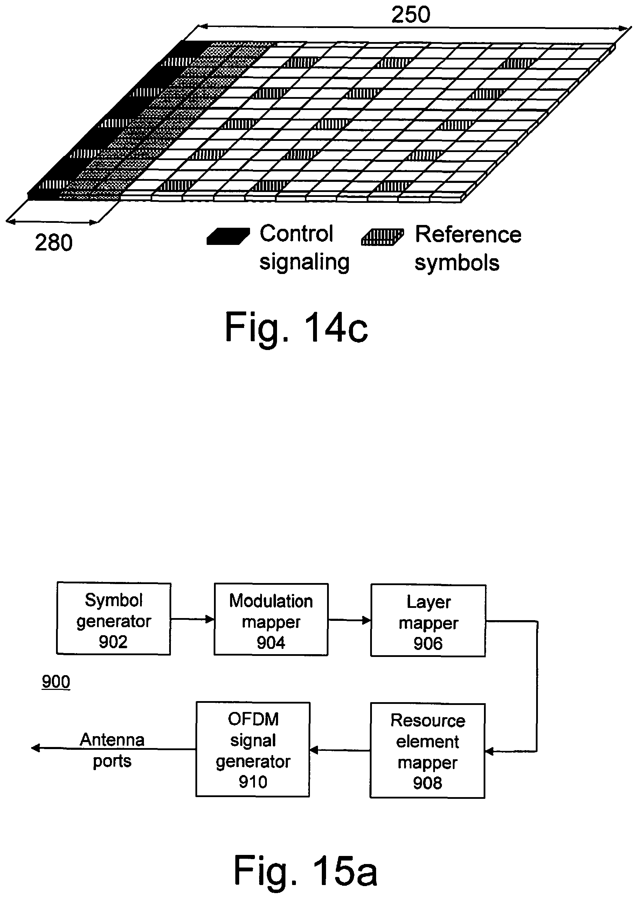

**Figure 14c** also generally depicts the LTE DL physical resource in terms of physical resource blocks (PRB), with each PRB corresponding to one slot in the time domain and twelve 15-kHz subcarriers in the frequency domain. PRBs are consecutively numbered within the bandwidth of an OFDM carrier, starting with 0 at one end of the system bandwidth. Two consecutive resource blocks in time represent a resource block pair and correspond to two time slots, one subframe 250, or 0.5 ms.

Transmissions in LTE are dynamically scheduled in each subframe, and scheduling operates on the time interval of a subframe. An eNodeB transmits assignments or grants to certain UEs via a PDCCH, which is carried by the first 1, 2, 3, or 4 OFDM symbol(s) in each subframe and spans over the whole system bandwidth. A UE that has decoded the control information carried by a PDCCH knows which resource elements in the subframe contain data aimed for the UE. In the example depicted by **Figure 14c****,** the PDCCHs occupy just the first symbol of three symbols in a control region 280 of the first PRB. In this particular case, therefore, the second and third symbols in the control region can be used for data.

The length of the control region, which can vary from subframe to subframe, is signaled to the UEs through a physical control format indicator channel (PCFICH), which is transmitted within the control region at locations known by the UEs. After a UE has decoded the PCFICH, it knows the size of the control region and in which OFDM symbol data transmission starts. Also transmitted in the control region is a physical hybrid automatic repeat request (ARQ) indicator channel (PHICH), which carries acknowledged/not-acknowledged (ACK/NACK) responses by an eNodeB to granted uplink transmission by a UE that inform the UE about whether its uplink data transmission in a previous subframe was successfully decoded by the eNodeB or not.

Coherent demodulation of received data requires estimation of the radio channel, which is facilitated by transmitting reference symbols (RS), i.e., symbols known by the receiver. Acquisition of channel state information (CSI) at the transmitter or the receiver is important to proper implementation of multi-antenna techniques. In LTE, an eNodeB transmits cell-specific reference symbols (CRS) in all DL subframes on known subcarriers in the OFDM frequency-vs.-time grid. CRS are described in, for example, Clauses 6.10 and 6.11 of 3GPP TS 36.211. A UE uses its received versions of the CRS to estimate characteristics, such as the impulse response, of its DL channel. The UE can then use the estimated channel matrix (CSI) for coherent demodulation of the received DL signal, for channel quality measurements to support link adaptation, and for other purposes. LTE also supports UE-specific reference symbols for assisting channel estimation at eNodeBs.

Before an LTE UE can communicate with the LTE network, i.e., with an eNodeB, the UE has to find and synchronize itself to a cell (i.e., an eNodeB) in the network, to receive and decode the information needed to communicate with and operate properly within the cell, and to access the cell by a so-called random-access procedure. The first of these steps, finding a cell and syncing to it, is commonly called cell search.

Cell search is carried out when a UE powers up or initially accesses a network, and is also performed in support of UE mobility. Thus, even after a UE has found and acquired a cell, which can be called its serving cell, the UE continually searches for, synchronizes to, and estimates the reception quality of signals from cells neighboring its serving cell. The reception qualities of the neighbor cells, in relation to the reception quality of the serving cell, are evaluated in order to determine whether a handover (for a UE in Connected mode) or a cell re-selection (for a UE in Idle mode) should be carried out. For a UE in Connected mode, the handover decision is taken by the network based on reports of DL signal measurements provided by the UE. Examples of such measurements are RSRP and RSRQ.

**Figure 15a** is a block diagram of an example of a portion of transmitter 900 for an eNodeB or other transmitting node of a communication system that uses the signals described above. Several parts of such a transmitter are known and described for example in Clauses 6.3 and 6.4 of 3GPP TS 36.211. Reference signals having symbols as described above are produced by a suitable generator 902 and provided to a modulation mapper 904 that produces complex-valued modulation symbols. A layer mapper 906 maps the modulation symbols onto one or more transmission layers, which generally correspond to antenna ports. A resource element (RE) mapper 908 maps modulation symbols for each antenna port onto respective REs and thus forms successions of RBs, subframes, and frames, and an OFDM signal generator 910 produces one or more complex-valued time-domain OFDM signals for eventual transmission. It will be appreciated that the node 900 can include one or more antennas for transmitting and receiving signals, as well as suitable electronic components for receiving signals and handling received signals as described above.

It will be appreciated that the functional blocks depicted in **Figure 15a** can be combined and re-arranged in a variety of equivalent ways, and that many of the functions can be performed by one or more suitably programmed digital signal processors. Moreover, connections among and information provided or exchanged by the functional blocks depicted in **Figure 15a** can be altered in various ways to enable a device to implement the methods described above and other methods involved in the operation of the device in a digital communication system.

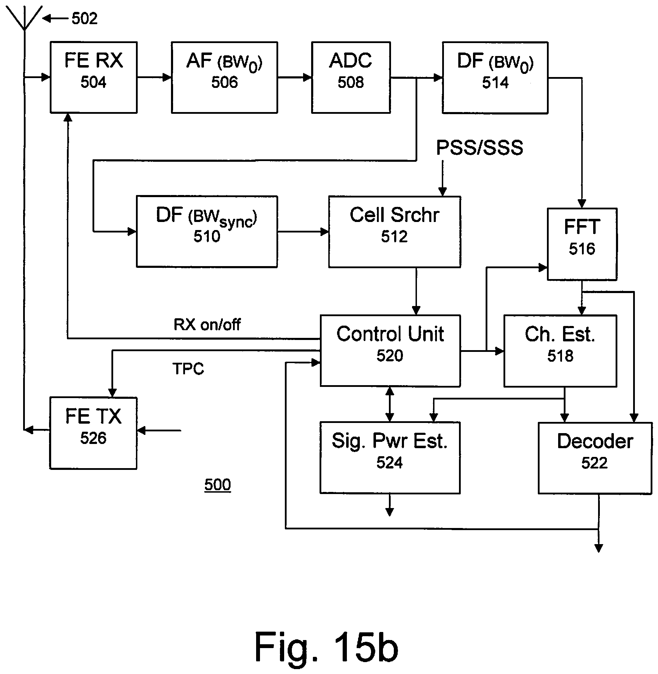

**Figure 15b** is a block diagram of an arrangement 500 in a UE that can implement the methods described above. It will be appreciated that the functional blocks depicted in **Figure 15b** can be combined and re-arranged in a variety of equivalent ways, and that many of the functions can be performed by one or more suitably programmed digital signal processors. Moreover, connections among and information provided or exchanged by the functional blocks depicted in **Figure 15b** can be altered in various ways to enable a UE to implement other methods involved in the operation of the UE.

As depicted in **Figure 15b****,** a UE receives a DL radio signal through an antenna 502 and typically down-converts the received radio signal to an analog baseband signal in a front end receiver (Fe RX) 504. The baseband signal is spectrally shaped by an analog filter 506 that has a bandwidth BW0, and the shaped baseband signal generated by the filter 506 is converted from analog to digital form by an analog-to-digital converter (ADC) 508.

The digitized baseband signal is further spectrally shaped by a digital filter 510 that has a bandwidth BWsync, which corresponds to the bandwidth of synchronization signals or symbols included in the DL signal. The shaped signal generated by the filter 510 is provided to a cell search unit 512 that carries out one or more methods of searching for cells as specified for the particular communication system, e.g., LTE. Typically, such methods in the UE comprise detecting predetermined primary and/or secondary synchronization channel (P/S-SCH) signals received at the UE.

The digitized baseband signal is also provided by the ADC 508 to a digital filter 514 that has the bandwidth BW0, and the filtered digital baseband signal is provided to a processor 516 that implements a fast Fourier transform (FFT) or other suitable algorithm that generates a frequency-domain (spectral) representation of the baseband signal. A channel estimation unit 518 receives signals from the processor 516 and generates a channel estimate Hi, j for each of several subcarriers i and cells j based on control and timing signals provided by a control unit 520, which also provides such control and timing information to the processor 516.

The estimator 518 provides the channel estimates Hi to a decoder 522 and a signal power estimation unit 524. The decoder 522, which also receives signals from the processor 516, is suitably configured to extract information from TPC, RRC or other messages as described above and typically generates signals subject to further processing in the UE (not shown). The estimator 524 generates received signal measurements (e.g., estimates of RSRP, received subcarrier power, signal to interference ratio (SIR), etc.). The estimator 524 can generate estimates of RSRP, RSRQ, received signal strength indicator (RSSI), received subcarrier power, SIR, and other relevant measurements, in various ways in response to control signals provided by the control unit 520. Power estimates generated by the estimator 524 are typically used in further signal processing in the UE.

As depicted in **Figure 15b****,** the UE transmits a UL radio signal through the antenna 502 that has been generated by up-conversion and controllable amplification in a front end transmitter (FE TX) 526. The FE TX 526 adjusts the power level of the UL signal based on a transmit power control signal provided by the control unit 520.

The estimator 524 (or the searcher 512, for that matter) is configured to include a suitable signal correlator for handling reference and other signals.

In the arrangement depicted in **Figure 15b****,** the control unit 520 keeps track of substantially everything needed to configure the searcher 512, processor 516, estimation unit 518, estimator 524, and FE TX 526. For the estimation unit 518, this includes both method and cell ID (e.g., for reference signal extraction and cell-specific scrambling of reference signals). For the FE TX 526, this includes power control signals corresponding to received TPC commands, as well as generation of RACH signals as described above. Communication between the searcher 512 and the control unit 520 includes cell ID and, for example, cyclic prefix configuration.

The control unit 520 determines which estimation method is used by the estimator 518 and/or by the estimator 524 for measurements on the detected cell(s) as described above. In particular, the control unit 520, which typically can include a correlator or implement a correlator function, can receive information signaled by the eNodeB and can control the on/off times of the Fe RX 504, the transmit power level of the FE TX 526, and the RACH signals transmitted as described above.

The control unit and other blocks of the UE can be implemented by one or more suitably programmed electronic processors, collections of logic gates, etc. that processes information stored in one or more memories. The stored information can include program instructions and data that enable the control unit to implement the methods described above. It will be appreciated that the control unit typically includes timers, etc. that facilitate its operations.

It will be appreciated that the methods and devices described above can be combined and re-arranged in a variety of equivalent ways, and that the methods can be performed by one or more suitably programmed or configured digital signal processors and other known electronic circuits (e.g., discrete logic gates interconnected to perform a specialized function, or application-specific integrated circuits). Many aspects of this invention are described in terms of sequences of actions that can be performed by, for example, elements of a programmable computer system. UEs embodying this invention include, for example, mobile telephones, pagers, headsets, laptop computers and other mobile terminals, and the like. Moreover, this invention can additionally be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a medium and execute the instructions.

It will be appreciated that procedures described above are carried out repetitively as necessary, for example, to respond to the time-varying nature of communication channels between transmitters and receivers. In addition, it will be understood that the methods and apparatus described here can be implemented in various system nodes.

To facilitate understanding, many aspects of this invention are described in terms of sequences of actions that can be performed by, for example, elements of a programmable computer system. It will be recognized that various actions could be performed by specialized circuits (e.g., discrete logic gates interconnected to perform a specialized function or application-specific integrated circuits), by program instructions executed by one or more processors, or by a combination of both. Wireless devices implementing embodiments of this invention can be included in, for example, mobile telephones, pagers, headsets, laptop computers and other mobile terminals, base stations, and the like.

Moreover, this invention can additionally be considered to be embodied entirely within any form of computer-readable storage medium having stored therein an appropriate set of instructions for use by or in connection with an instruction-execution system, apparatus, or device, such as a computer-based system, processor-containing system, or other system that can fetch instructions from a storage medium and execute the instructions. As used here, a "computer-readable medium" can be any means that can contain, store, or transport the program for use by or in connection with the instruction-execution system, apparatus, or device. The computer-readable medium can be, for example but not limited to, an electronic, magnetic, optical, electromagnetic, infrared, or semiconductor system, apparatus, or device. More specific examples (a non-exhaustive list) of the computer-readable medium include an electrical connection having one or more wires, a portable computer diskette, a random-access memory (RAM), a read-only memory (ROM), an erasable programmable read-only memory (EPROM or Flash memory), and an optical fiber.

Thus, the invention may be embodied in many different forms, not all of which are described above, and all such forms are contemplated to be within the scope of the invention. For each of the various aspects of the invention, any such form may be referred to as "logic configured to" perform a described action, or alternatively as "logic that" performs a described action.

## Claims

1. A method in a wireless device for performing a random access to a cell of a wireless network, the method comprising:
- receiving (11) information from a radio network node comprised in the wireless network, wherein the received information indicates a first and a second random access transmission configuration,
- selecting (12) one of the first and second random access transmission configurations,
- transmitting (13) a random access preamble in accordance with the selected random access transmission configuration,
- monitoring (14) to detect a random access response within a first time window when the first random access transmission configuration is selected, and
- monitoring (15) to detect the random access response within a second time window when the second random access transmission configuration is selected, wherein the second time window overlaps with at least one low-interference subframe associated with a neighbor cell.

2. The method according to claim 1, further comprising when the random access response is detected within the second time window:
- receiving (16) the random access response from the radio network node in at least one of said low interference subframes within the second time window in response to the transmitted random access preamble.

3. The method according to any of claims 1-2, further comprising:
- receiving information from the radio network node, related to a configuration of the first and the second time window.

4. The method according to any of the preceding claims, wherein selecting (12) one of the first and second random access transmission configurations comprises:
- receiving (121) a path loss threshold from the radio network node,
- measuring (122) a path loss in the cell,
- comparing (123) the measured path loss with the received path loss threshold,
- selecting (124) one of the first and second random access transmissions configurations based on the comparison.

5. The method according to any of the preceding claims, wherein the first random access transmission configuration comprises a first time-frequency resource configured for random access, and the second random access transmission configuration comprises a second time-frequency resource configured for random access, the second time-frequency resource overlapping with a low-interference time-frequency resource associated with the neighbor cell.

6. The method according to claim 5, wherein the low-interference time-frequency resource overlaps with an uplink almost blank subframe used in the neighbor cell.

7. A method in a radio network node for enabling a wireless device to perform a random access to a cell of a wireless network, the method comprising:
- transmitting (21) information to the wireless device, wherein the transmitted information indicates a first and a second random access transmission configuration,
- receiving (22) a random access preamble in accordance with one of the first and second random access transmission configurations,
- determining (23) whether the first or the second random access transmission configuration is used based on the received random access preamble, and
- transmitting (24) a random access response in response to the received random access preamble within a first time window, when it is determined that the first random access transmission configuration is used, and
- transmitting (25) a random access response in response to the received random access preamble within a second time window, when it is determined that the second random access transmission configuration is used, the second time window overlapping with at least one low-interference subframe associated with a neighbor cell.

8. The method according to claim 7, wherein the random access response is transmitted in a low-interference subframe within the second time window, when it is determined that the second random access transmission configuration is used.

9. The method according to any of claims 7-8, further comprising:
- transmitting information to the wireless device or to another network node, said information being related to a configuration of the first and the second time window.

10. The method according to any of claims 7-9, wherein the first random access transmission configuration comprises a first time-frequency resource configured for random access, and the second random access transmission configuration comprises a second time-frequency resource configured for random access, the second time-frequency resource overlapping with a low-interference time-frequency resource associated with a neighbor cell.

11. The method according to claim 10, wherein the low-interference time-frequency resource overlaps with an uplink almost blank subframe used in a cell.

12. A wireless device (1200) configured to perform a random access to a cell of a wireless network, the wireless device comprising:
- a receiver (1201) configured to receive information from a radio network node (1250) comprised in the wireless network, wherein the received information indicates a first and a second random access transmission configuration,
- a processing circuit (1202) configured to select one of the first and second random access transmission configurations, and
- a transmitter (1203) configured to transmit a random access preamble in accordance with the selected random access transmission configuration,
wherein the processing circuit (1202) is further configured to:
- monitor to detect a random access response within a first time window when the first random access transmission configuration is selected, and
- monitor to detect the random access response within a second time window when the second random access transmission configuration is selected, wherein the second time window overlaps with at least one low-interference subframe associated with a neighbor cell.

13. A radio network node (1250) configured to enable a wireless device (1200) to perform a random access to a cell of a wireless network, the radio network node comprising:
- a transmitter (1251) configured to transmit information to the wireless device (1200), wherein the transmitted information indicates a first and a second random access transmission configuration,
- a receiver (1252) configured to receive a random access preamble in accordance with one of the first and second random access transmission configurations, and
- a processing circuit (1253) configured to determine whether the first or the second random access transmission configuration is used, based on the received random access preamble,
wherein the transmitter (1251) is further configured to:
- transmit a random access response in response to the received random access preamble within a first time window, when it is determined that the first random access transmission configuration is used, and
- transmit a random access response in response to the received random access preamble within a second time window, when it is determined that the second random access transmission configuration is used, the second time window overlapping with at least one low-interference subframe associated with the neighbor cell.

## Patentansprüche

1. Verfahren in einer drahtlosen Vorrichtung zum Durchführen eines Direktzugriffs auf eine Zelle eines drahtlosen Netzwerks, wobei das Verfahren umfasst:
- Empfangen (11) von Informationen von einem Funknetzknoten, der in dem drahtlosen Netzwerk enthalten ist, wobei die empfangenen Informationen eine erste und eine zweite Direktzugriff-Übertragungskonfiguration anzeigen;
- Auswählen (12) einer aus der ersten und zweiten Direktzugriff-Übertragungskonfiguration,
- Übertragen (13) einer Direktzugriffspräambel in Übereinstimmung mit der ausgewählten Direktzugriff-Übertragungskonfiguration,
- Überwachen (14), um eine Direktzugriffsantwort innerhalb eines ersten Zeitfensters zu detektieren, wenn die erste Direktzugriff-Übertragungskonfiguration ausgewählt wurde; und
- Überwachen (15), um die Direktzugriffsantwort innerhalb eines zweiten Zeitfensters zu detektieren, wenn die zweite Direktzugriff-Übertragungskonfiguration ausgewählt wurde, wobei das zweite Zeitfenster sich mit mindestens einem Unterrahmen niedriger Interferenz überlappt, der einer Nachbarzelle zugeordnet ist.

2. Verfahren nach Anspruch 1, ferner umfassend, wenn die Direktzugriffsantwort innerhalb des zweiten Zeitfensters detektiert wird:
- Empfangen (16) der Direktzugriffsantwort von dem Funknetzknoten in zumindest einem der Unterrahmen niedriger Interferenz innerhalb des zweiten Zeitfensters als Reaktion auf die übertragene Direktzugriffspräambel.

3. Verfahren nach einem der Ansprüche 1 bis 2, ferner umfassend:
- Empfangen von Informationen von dem Funknetzknoten, die auf eine Konfiguration des ersten und des zweiten Zeitfensters bezogen sind.

4. Verfahren nach einem der vorhergehenden Ansprüche, wobei das Auswählen (12) einer aus der ersten und zweiten Direktzugriff-Übertragungskonfigurationen umfasst:
- Empfangen (121) eines Pfadverlustschwellenwerts von dem Funknetzknoten,
- Messen (122) eines Pfadverlusts in der Zelle,
- Vergleichen (123) des gemessenen Pfadverlusts mit dem empfangenen Pfadverlustschwellenwert,
- Auswählen (124) einer aus der ersten und der zweiten Direktzugriff-Übertragungskonfiguration auf der Basis des Vergleichs.

5. Verfahren nach einem der vorhergehenden Ansprüche, wobei die erste Direktzugriff-Übertragungskonfiguration eine erste Zeitfrequenzressource umfasst, die für den Direktzugriff konfiguriert ist, und die zweite Direktzugriff-Übertragungskonfiguration eine zweite Zeitfrequenzressource umfasst, die für den Direktzugriff konfiguriert ist, wobei die zweite Zeitfrequenzressource sich mit einer Zeitfrequenzressource niedriger Interferenz überlappt, die der benachbarten Zelle zugeordnet ist.

6. Verfahren nach Anspruch 5, wobei die Zeitfrequenzressource niedriger Interferenz mit einem fast leeren Uplink-Unterrahmen überlappt, der in der Nachbarzelle verwendet wird.

7. Verfahren in einem Funknetzknoten, um es einer drahtlosen Vorrichtung zu ermöglichen, einen Direktzugriff auf eine Zelle eines drahtlosen Netzwerks durchzuführen, wobei das Verfahren umfasst:
- Übertragen (21) von Informationen an die drahtlose Vorrichtung, wobei die übertragenen Informationen eine erste und eine zweite Direktzugriff-Übertragungskonfiguration anzeigen,
- Empfangen (22) einer Direktzugriffspräambel in Übereinstimmung mit einer aus der ersten und zweiten Direktzugriff-Übertragungskonfiguration,
- Bestimmen (23), ob die erste oder die zweite Direktzugriff-Übertragungskonfiguration verwendet wird, basierend auf der empfangenen Direktzugriffspräambel, und
- Übertragen (24) einer Direktzugriffsantwort als Reaktion auf die empfangene Direktzugriffspräambel innerhalb eines ersten Zeitfensters, wenn bestimmt wurde, dass die erste Direktzugriff-Übertragungskonfiguration verwendet wird, und
- Übertragen (25) einer Direktzugriffsantwort als Reaktion auf die empfangene Direktzugriffspräambel innerhalb eines zweiten Zeitfensters, wenn bestimmt wurde, dass die zweite Direktzugriff-Übertragungskonfiguration verwendet wird, wobei sich das zweite Zeitfenster mit mindestens einem Unterrahmen niedriger Interferenz überlappt, der einer Nachbarzelle zugeordnet ist.

8. Verfahren nach Anspruch 7, wobei die Direktzugriffsantwort in einem Unterrahmen mit niedriger Interferenz innerhalb des zweiten Zeitfensters übertragen wird, wenn bestimmt wurde, dass die zweite Direktzugriff-Übertragungskonfiguration verwendet wird.

9. Verfahren nach einem der Ansprüche 7 bis 8, ferner umfassend:
- Übertragen von Informationen an die drahtlose Vorrichtung oder an einen anderen Netzknoten, wobei die Informationen auf eine Konfiguration des ersten und des zweiten Zeitfensters bezogen sind.

10. Verfahren nach einem der Ansprüche 7 bis 9, wobei die erste Direktzugriff-Übertragungskonfiguration eine erste Zeitfrequenzressource umfasst, die für Direktzugriff konfiguriert ist, und die zweite Direktzugriff-Übertragungskonfiguration eine zweite Zeitfrequenzressource umfasst, die für Direktzugriff konfiguriert ist, wobei die zweite Zeitfrequenzressource sich mit einer Zeitfrequenzressource niedriger Interferenz überlappt, die einer Nachbarzelle zugeordnet ist.

11. Verfahren nach Anspruch 10, wobei die Zeitfrequenzressource mit niedriger Interferenz sich mit einem fast leeren Uplink-Unterrahmen überlappt, der in einer Zelle verwendet wird.

12. Drahtlose Vorrichtung (1200), die konfiguriert ist, um einen Direktzugriff auf eine Zelle eines drahtlosen Netzwerks auszuführen, wobei die drahtlose Vorrichtung umfasst:
- einen Empfänger (1201), der konfiguriert ist, um Informationen von einem Funknetzknoten (1250), der in dem drahtlosen Netzwerk eingeschlossen ist, zu empfangen, wobei die empfangenen Informationen eine erste und eine zweite Direktzugriff-Übertragungskonfiguration anzeigen;
- eine Verarbeitungsschaltung (1202), die konfiguriert ist, um eine aus der ersten und zweiten Direktzugriff-Übertragungskonfiguration auszuwählen; und
- einen Sender (1203), der konfiguriert ist, um eine Direktzugriffspräambel gemäß der ausgewählten Direktzugriff-Übertragungskonfiguration zu übertragen,
wobei die Verarbeitungsschaltung (1202) ferner konfiguriert ist zum:
- Überwachen, um eine Direktzugriffsantwort innerhalb eines ersten Zeitfensters zu detektieren, wenn die erste Direktzugriff-Übertragungskonfiguration ausgewählt wurde, und
- Überwachen, um die Direktzugriffsantwort innerhalb eines zweiten Zeitfensters zu detektieren, wenn die zweite Direktzugriff-Übertragungskonfiguration ausgewählt wurde, wobei das zweite Zeitfenster sich mit mindestens einem Unterrahmen niedriger Interferenz überlappt, der einer Nachbarzelle zugeordnet ist.

13. Funknetzknoten (1250), der konfiguriert ist, um einer drahtlosen Vorrichtung (1200) zu ermöglichen, einen Direktzugriff auf eine Zelle eines drahtlosen Netzwerks durchzuführen, wobei der Funknetzknoten umfasst:
- einen Sender (1251), der konfiguriert ist, um Informationen an die drahtlose Vorrichtung (1200) zu übertragen, wobei die gesendeten Informationen eine erste und eine zweite Direktzugriff-Übertragungskonfiguration anzeigen;
- einen Empfänger (1252), der konfiguriert ist, um eine Direktzugriffspräambel gemäß einer aus der ersten und zweiten Direktzugriff-Übertragungskonfiguration zu empfangen; und
- eine Verarbeitungsschaltung (1253), die konfiguriert ist, um basierend auf der empfangenen Direktzugriffspräambel zu bestimmen, ob die erste oder die zweite Direktzugriff-Übertragungskonfiguration verwendet wird;
wobei der Sender (1251) ferner konfiguriert ist, um:
- eine Direktzugriffsantwort als Reaktion auf die empfangene Direktzugriffspräambel innerhalb eines ersten Zeitfensters zu übertragen, wenn bestimmt wurde, dass die erste Direktzugriff-Übertragungskonfiguration verwendet wird, und
- eine Direktzugriffsantwort als Reaktion auf die empfangene Direktzugriffspräambel innerhalb eines zweiten Zeitfensters zu übertragen, wenn bestimmt wurde, dass die zweite Direktzugriff-Übertragungskonfiguration verwendet wird, wobei sich das zweite Zeitfenster mit mindestens einem Unterrahmen niedriger Interferenz überlappt, der einer Nachbarzelle zugeordnet ist.

## Revendications

1. Procédé dans un dispositif sans fil pour effectuer un accès aléatoire à une cellule d'un réseau sans fil, le procédé comprenant :
- la réception (11) d'informations depuis un noeud de réseau radio compris dans le réseau sans fil, dans lequel les informations reçues indiquent une première et une deuxième configuration de transmission d'accès aléatoire,
- la sélection (12) de la première ou de la deuxième configuration de transmission d'accès aléatoire,
- la transmission (13) d'un préambule d'accès aléatoire conformément à la configuration de transmission d'accès aléatoire sélectionnée,
- la surveillance (14) pour détecter une réponse d'accès aléatoire dans une première fenêtre temporelle lorsque la première configuration de transmission d'accès aléatoire est sélectionnée, et
- la surveillance (15) pour détecter la réponse d'accès aléatoire dans une deuxième fenêtre temporelle lorsque la deuxième configuration de transmission d'accès aléatoire est sélectionnée, dans lequel la deuxième fenêtre temporelle chevauche au moins une sous-trame à faible interférence associée à une cellule voisine.

2. Procédé selon la revendication 1, comprenant en outre, lorsque la réponse d'accès aléatoire est détectée dans la deuxième fenêtre temporelle :
- la réception (16) de la réponse d'accès aléatoire depuis le noeud de réseau radio dans au moins une desdites sous-trames à faible interférence dans la deuxième fenêtre temporelle en réponse au préambule d'accès aléatoire transmis.

3. Procédé selon l'une quelconque des revendications 1 à 2, comprenant en outre :
- la réception d'informations depuis le noeud de réseau radio, se rapportant à une configuration de la première et de la deuxième fenêtre temporelle.

4. Procédé selon l'une quelconque des revendications précédentes, dans lequel la sélection (12) d'une des première et deuxième configurations de transmission d'accès aléatoire comprend :
- la réception (121) d'un seuil d'affaiblissement de propagation depuis le noeud de réseau radio,
- la mesure (122) d'un affaiblissement de propagation dans la cellule,
- la comparaison (123) de l'affaiblissement de propagation mesuré au seuil d'affaiblissement de propagation reçu,
- la sélection (124) de la première ou de la deuxième configuration de transmission d'accès aléatoire sur la base de la comparaison.

5. Procédé selon l'une quelconque des revendications précédentes, dans lequel la première configuration de transmission d'accès aléatoire comprend une première ressource temps-fréquence configurée pour un accès aléatoire, et la deuxième configuration de transmission d'accès aléatoire comprend une deuxième ressource temps-fréquence configurée pour un accès aléatoire, la deuxième ressource temps-fréquence chevauchant une ressource temps-fréquence à faible interférence associée à la cellule voisine.

6. Procédé selon la revendication 5, dans lequel la ressource temps-fréquence à faible interférence chevauche une sous-trame pratiquement vierge de liaison montante utilisée dans la cellule voisine.

7. Procédé dans un noeud de réseau radio pour permettre à un dispositif sans fil d'effectuer un accès aléatoire à une cellule d'un réseau sans fil, le procédé comprenant :
- la transmission (21) d'informations au dispositif sans fil, dans lequel les informations transmises indiquent une première et une deuxième configuration de transmission d'accès aléatoire,
- la réception (22) d'un préambule d'accès aléatoire conformément à l'une des première et deuxième configurations de transmission d'accès aléatoire,
- le fait de déterminer (23) si la première ou la deuxième configuration de transmission d'accès aléatoire est utilisée sur la base du préambule d'accès aléatoire reçu, et
- la transmission (24) d'une réponse d'accès aléatoire en réponse au préambule d'accès aléatoire reçu dans une première fenêtre temporelle, lorsqu'il est déterminé que la première configuration de transmission d'accès aléatoire est utilisée, et
- la transmission (25) d'une réponse d'accès aléatoire en réponse au préambule d'accès aléatoire reçu dans une deuxième fenêtre temporelle, lorsqu'il est déterminé que la deuxième configuration de transmission d'accès aléatoire est utilisée, la deuxième fenêtre temporelle chevauchant au moins une sous-trame à faible interférence associée à une cellule voisine.

8. Procédé selon la revendication 7, dans lequel la réponse d'accès aléatoire est transmise dans une sous-trame à faible interférence dans la deuxième fenêtre temporelle, lorsqu'il est déterminé que la deuxième configuration de transmission d'accès aléatoire est utilisée.

9. Procédé selon l'une quelconque des revendications 7 à 8, comprenant en outre :
- la transmission d'informations au dispositif sans fil ou à un autre noeud de réseau, lesdites informations se rapportant à une configuration de la première et de la deuxième fenêtre temporelle.

10. Procédé selon l'une quelconque des revendications 7 à 9, dans lequel la première configuration de transmission d'accès aléatoire comprend une première ressource temps-fréquence configurée pour un accès aléatoire, et la deuxième configuration de transmission d'accès aléatoire comprend une deuxième ressource temps-fréquence configurée pour un accès aléatoire, la deuxième ressource temps-fréquence chevauchant une ressource temps-fréquence à faible interférence associée à une cellule voisine.

11. Procédé selon la revendication 10, dans lequel la ressource temps-fréquence à faible interférence chevauche une sous-trame pratiquement vierge de liaison montante utilisée dans une cellule.

12. Dispositif sans fil (1200) configuré pour effectuer un accès aléatoire à une cellule d'un réseau sans fil, le dispositif sans fil comprenant :
- un récepteur (1201) configuré pour recevoir des informations depuis un noeud de réseau radio (1205) compris dans le réseau sans fil, dans lequel les informations reçues indiquent une première et une deuxième configuration de transmission d'accès aléatoire,
- un circuit de traitement (1202) configuré pour sélectionner la première ou la deuxième configuration de transmission d'accès aléatoire, et
- un émetteur (1203) configuré pour transmettre un préambule d'accès aléatoire conformément à la configuration de transmission d'accès aléatoire sélectionnée,
dans lequel le circuit de traitement (1202) est en outre configuré pour :
- surveiller afin de détecter une réponse d'accès aléatoire dans une première fenêtre temporelle lorsque la première configuration de transmission d'accès aléatoire est sélectionnée, et
- surveiller afin de détecter la réponse d'accès aléatoire dans une deuxième fenêtre temporelle lorsque la deuxième configuration de transmission d'accès aléatoire est sélectionnée, dans lequel la deuxième fenêtre temporelle chevauche au moins une sous-trame à faible interférence associée à une cellule voisine.

13. Noeud de réseau radio (1250) configuré pour permettre à un dispositif sans fil (1200) d'effectuer un accès aléatoire à une cellule d'un réseau sans fil, le noeud de réseau radio comprenant :
- un émetteur (1251) configuré pour transmettre des informations au dispositif sans fil (1200), dans lequel les informations transmises indiquent une première et une deuxième configuration de transmission d'accès aléatoire,
- un récepteur (1252) configuré pour recevoir un préambule d'accès aléatoire conformément à la première ou à la deuxième configuration de transmission d'accès aléatoire, et
- un circuit de traitement (1253) configuré pour déterminer si la première ou la deuxième configuration de transmission d'accès aléatoire est utilisée, sur la base du préambule d'accès aléatoire reçu,
dans lequel l'émetteur (1251) est en outre configuré pour :
- transmettre une réponse d'accès aléatoire en réponse au préambule d'accès aléatoire reçu dans une première fenêtre temporelle, lorsqu'il est déterminé que la première configuration de transmission d'accès aléatoire est utilisée, et
- transmettre une réponse d'accès aléatoire en réponse au préambule d'accès aléatoire reçu dans une deuxième fenêtre temporelle, lorsqu'il est déterminé que la deuxième configuration de transmission d'accès aléatoire est utilisée, la deuxième fenêtre temporelle chevauchant au moins une sous-trame à faible interférence associée à la cellule voisine.
